# EUROPEAN PATENT APPLICATION

(11) **EP 1 150 233 A1**
(43) Date of publication of application: **31.10.2001**
(21) Application number: 01110493.2
(22) Date of filing: 27.04.2001
(51) Int. Cl.: G06F 17/60

(54) **Apparatus and method for collecting used office supplies**

(30) Priority: 28.04.2000 JP 2000131747; 20.04.2001 JP 2001123002
(71) Applicant: CANON KABUSHIKI KAISHA, Tokyo (JP)
(72) Inventor: Sato, Kazuma, Ohta-ku, Tokyo (JP); Ono, Yasuhiko, Ohta-ku, Tokyo (JP); Ando, Nobuhiro, Minato-ku, Tokyo (JP); Takada, Kotaro, Minato-ku, Tokyo (JP)
(74) Representative: Leson, Thomas Johannes Alois, Dipl.-Ing.

(57) **Abstract**

Counting of data, namely calculation of collecting rate for respective users or kinds in a collecting center which collects various kinds of used office supplies is extremely complex and troublesome. For this reason, a client who requests collecting accesses a collecting system and requests collecting of the used office supplies. The collecting system stores collecting data of the kind and quantity of the used office supplies to be collected associated with users in a memory and transmits a collecting code corresponding to the collecting data to the client. The client generates a collecting slip including the collecting code received and dispatches the used office supplies with the collecting slip attached to the collecting center. The collecting center reads out the collecting code recorded on the collecting slip attached to the used office supplies dispatched and calculates the collecting rate for respective users and used office supplies based on the collecting code.

## Description

### FIELD OF THE INVENTION

The present invention relates to an apparatus and a method for collecting used office supplies and a recording medium used therefor, and for example to collection of the used office supplies such as cartridges.

### BACKGROUND OF THE INVENTION

Some types of electrophotographic printers or facsimiles are fitted with cartridges containing toner which are replaced in whole when the toner is run out. Such types have advantages that the toner is easily added and that consumable components incorporated in the cartridge such as a photosensitive drum, developing device, cleaning member and the like are replaced at the same time as the replacement of the cartridge, which facilitates maintenance of equipment. Providing the cartridge with part of components of the equipment can also reduce a production cost of the equipment.

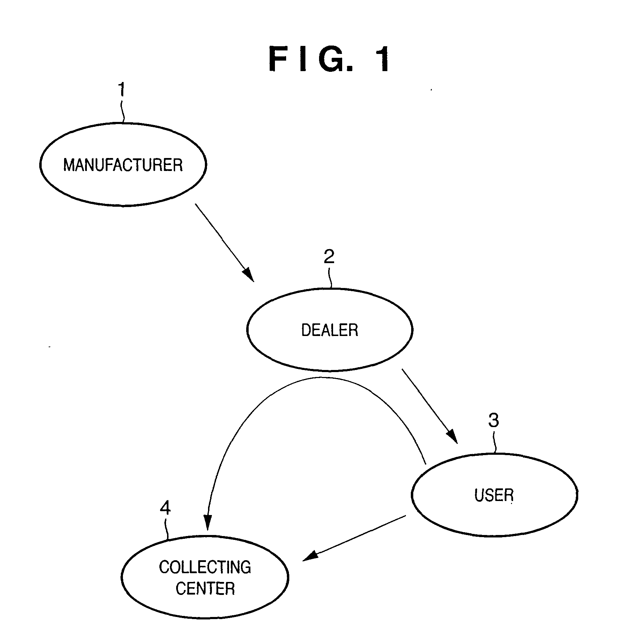

Fig. 1 is a schematic diagram showing a flow among a manufacturer, dealer, user and collecting center of the cartridge.

The cartridge is usually sold by a manufacturer 1 of the equipment to which the cartridge is fitted through a sales channel to a user 3. Namely, the user 3 purchases the cartridge from a dealer 2 in exchange for the cost and uses it.

An used cartridge is brought to the dealer 2 by the user 3 and then packed in a collecting container by the dealer 2 to be sent to a collecting center 4 managed by the manufacturer 1 or the like. Alternatively, the user 3 sometimes directly packs the used cartridge in the collecting container and send it to the collecting center 4.

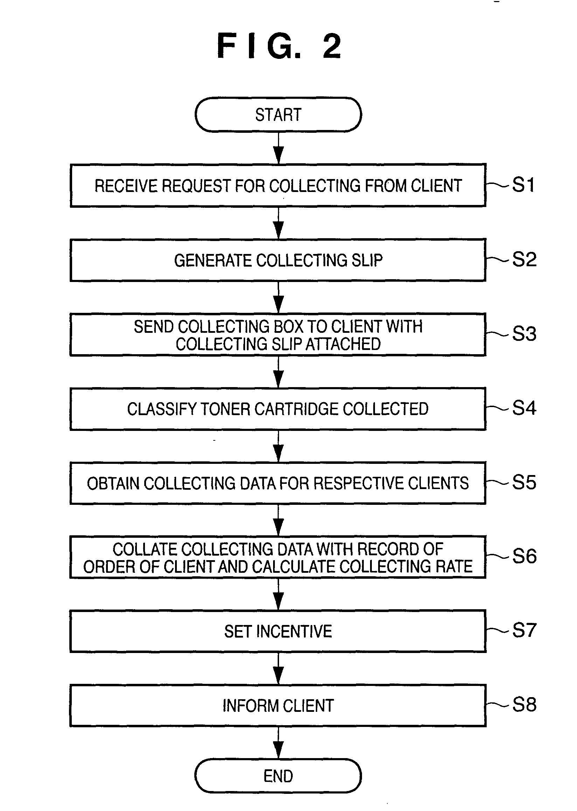

Fig. 2 is a flowchart for explaining collecting work in the collecting center 4.

For collecting, the dealer 2 or user 3 (hereinafter referred to as "customer") makes a request for collecting to the collecting center 4 or the like using a communication device such as a facsimile, which is received by the collecting center 4 (S1). The collecting center 4 having received the request for collecting generates a collecting slip for the customer (S2) to send the collecting container (box), with the slip attached, to the customer (S3). Then, the used cartridges sent from the customer are classified by a visual check or the like by an operator (S4) to be input via a keyboard or the like, thereby obtaining collecting data by customer (S5).

The customer is informed of a collecting rate calculated for the purpose of promotion of collecting the used cartridges. The collecting rate is basic of setting incentive to the customer. Namely, the collecting center 4 collates collecting data of the customer with a record of orders accepted (sale) to calculate the collecting rate (S6) and set the incentive, which is reported to the customer (S8). The report to the customer has been conventionally made by mail.

Collecting the used cartridge with such an incentive introduced is extremely effective for improving the collecting rate.

As described above, the cartridge is not only used as the container containing the toner but also sometimes serves as a component with the consumable components incorporated such as the photosensitive drum, developing device, cleaning member or merely has a function of containing the toner. Thus, with regard to the cartridge only, there are various kinds of cartridges so that setting the incentive to all the cartridges by the collecting rate of the customer only cannot be regarded as a useful setting method of the incentive. For this reason, as shown in Fig. 2, the collecting rate is calculated for respective kinds of the collected cartridges to set the incentive for respective kinds of the cartridge.

Moreover, a target for collecting is not limited to the cartridge but includes a toner container and photosensitive drum for a copier, an ink container, cartridge and print head for a inkjet printer, other service parts, paper and OHP sheets and the like, and further includes a body of office equipment such as a printer body, copier body, and scanner body. In the following description, the target goods for collecting are sometimes referred to as "used office supplies".

In this way, counting of the data in the collecting center 4 as described above and setting the incentive are extremely complex and troublesome, and it is considered to be difficult to count the data precisely because of classification errors or input errors by the operator.

On the customer' side, since the counting of the data described above takes time, it is irritating that the latest condition of collecting cooperation cannot be grasped immediately and there is also a disadvantage that it takes time to obtain result of the collecting cooperation.

### SUMMARY OF THE INVENTION

The present invention is made in order to solve the above problems individually or collectively and has its object to count data of collecting for used office supplies easily and precisely.

For this object, according to a preferred embodiment of the present invention, there is disclosed a collecting apparatus for collecting used office supplies comprising:
a receiver, arranged to receive a request for collecting the used office supplies from a client;
a controller, arranged to have collecting data concerning the used office supplies requested for collecting stored in a memory with the data associated with said client; and
an issuer, arranged to issue a collecting code for accessing the collecting data stored in said memory.

Another object of the present invention is to enable a user to immediately grasp a collecting condition so that result of collecting cooperation is immediately reflected.

Still another object of the present invention is to permit grasping in advance the used office supplies to be collected.

A further object of the present invention is to flexibly provide an incentive.

A still further object of the present invention is to permit a quicker response to a request for collecting the used office supplies from a client to a collecting center.

For these objects, disclosed in a preferred embodiment of the present invention is a collecting apparatus for collecting used office supplies comprising:
an updater, arranged to update client's collecting data of the used office supplies which is accumulated in a memory for respective clients;
a calculator, arranged to calculate information on incentive in compliance with the collecting data updated by the updater; and
a provider, arranged to provide information on an order screen by which said client orders the used office supplies, wherein said information on the order screen includes said information on the incentive.

Further disclosed is a collecting apparatus for collecting used office supplies comprising:
a reader, arranged to read a collecting code which is sent together with the used office supplies and includes at least information on kinds of the used office supplies;
a manager arranged to manage a collecting condition of the used office supplies in compliance with the collecting code read by the reader; and
a provider, arranged to provide information for indicating the collecting condition managed by the manager to a computer externally connected via the Internet.

Still further disclosed is a collecting apparatus for collecting used office supplies comprising:
a provider, arranged to provide a computer communicably connected, with information on a screen for requesting collecting of the used office supplies, at least for inputting the information which identifies the kind of said used office supplies; and
an informer, arranged to inform said computer of a collecting code including the information which is input via an indicating screen based on said information on the screen and identifies the kind of said used office supplies.

According to a preferred embodiment of the present invention, there is yet further provided an information processing apparatus for receiving a request to collect used office supplies comprising:
a receiver, arranged to receive information on a request for collecting including information on at least the kind and quantity of said used office supplies which is transmitted from the computer connected via the Internet;
a generator, arranged to generate the collecting code including information on at least the kind and quantity of said used office supplies based on the information on the request for collecting received by the receiver; and
a transmitter, arranged to transmit the collecting code generated by the generator to said computer.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a diagram showing a flow of a toner cartridge;
Fig. 2 is a flowchart for explaining collecting work in a collecting center;
Fig. 3 is a schematic diagram showing a sequence of collecting of used office supplies in a collecting system of the embodiment;
Fig. 4 is a block diagram showing an arrangement and connection of a network of the collecting center and a user;
Fig. 5 shows a login screen of a sale/collecting system;
Fig. 6 shows a selection screen of processes;
Fig. 7 shows a purchase screen of office supplies;
Fig. 8 shows a selection screen of collecting manners;
Fig. 9 shows a screen displayed when a lump-sum collecting is desired;
Fig. 10 shows a screen displayed when an individual collecting is desired;
Fig. 11 shows a collecting slip;
Fig. 12 shows a confirmation screen;
Fig. 13 shows a detail screen;
Figs. 14 to 16 are flowcharts for explaining a processing in the sale/collecting system;
Fig. 17 is a flowchart showing a processing in a collecting system after arrival of the used office supplies;
Figs. 18A and 18B are flowcharts showing exceptional processing;
Fig. 19 shows a login screen of the sale/collecting system during a promotion term for the purpose of promotion of collecting specific used office supplies;
Fig. 20 shows a table of relationship between a collecting rate and an incentive;
Fig. 21 shows a table of relationship between quantity of orders accepted and a discount rate;
Fig. 22 shows a table of relationship between the collecting rate and incentive during the promotion term;
Fig. 23 is a diagram for explaining a prediction sequence of the collecting and shipping;
Fig. 24 shows a cartridge used in a printer;
Fig. 25 shows data stored in a memory of the cartridge;
Fig. 26 is a schematic view showing a configuration of a laser beam printer; and
Fig. 27 is a schematic view showing a configuration of an inkjet printer.

### DETAILED DESCRIPTION OF THE PREFERRED EMBODIMENTS

A collecting system of used office supplies according to the present invention will be described below in detail with reference to the drawings. In the embodiment, a cartridge used in equipment such as an electrophotographic printer, copier and facsimile device is taken for explanation as an example of the used office supplies, however, the present invention can be applied to other used office supplies. These may include, for example, a toner container and photosensitive drum for the copier, other service parts, paper, OHP sheets, an ink container, a cartridge and print head for an inkjet printer. For many of them, empty containers are desired to be collected, for example, the toner container and a package box of the toner for the copier are desired to be collected.

### [Summary of a Collecting System]

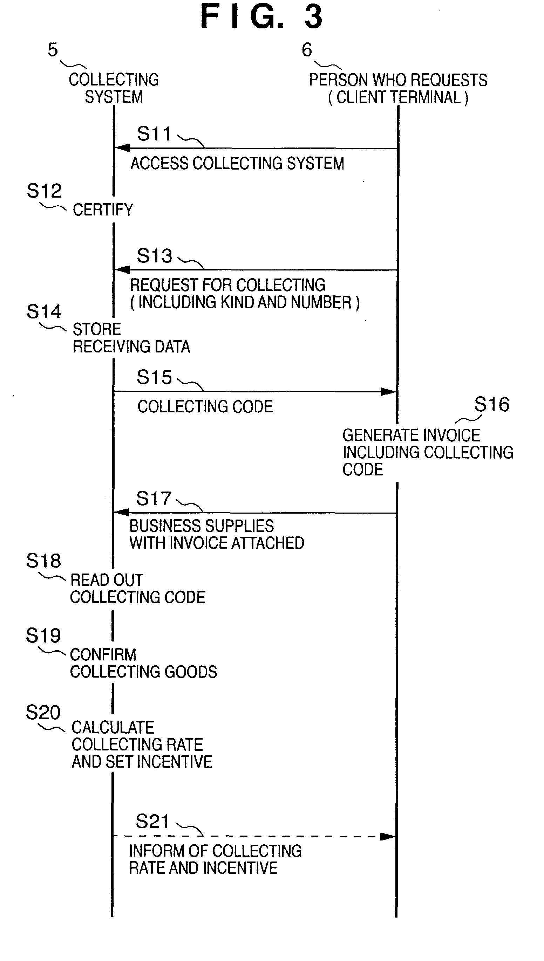

Fig. 3 is a view of a sequence showing an outline of collecting of the used office supplies in the collecting system of this embodiment.

For collecting, a client 6 in Fig. 3 accesses a collecting system 5 in the Fig. 3 via a page of a Web site presented by the collecting center 4 in Fig. 1 (S11), and when certified as a registered user by the collecting system 5 (S12), requests collecting of the used office supplies (S13). This request includes information on kinds and number (quantity) of the used office supplies which are desired to be collected, and the client may also tell an expected date of collecting or area for collecting to the collecting center 4.

The collecting system 5 in Fig. 3 receives the request for collecting via the Internet or the like and stores the data of the kinds and number (quantity) of the used office supplies to be collected associated with the user in the memory (S14) and transmits a collecting code corresponding to the data to the client 6 (S15). The client 6 having received the collecting code generates a collecting slip including at least the collecting code received (S16) and dispatches the used office supplies, with the collecting slip attached, to the collecting center 4 (S17).

The collecting center 4 reads out the collecting code recorded on the collecting slip attached to the used office supplies dispatched (S18), confirms that the used office supplies are collected in compliance with the collecting data corresponding to the collecting code (S19) and calculates the collecting rate and sets the incentive for respective users and used office supplies (S20). If necessary, the client 6 is informed of the collecting rate and incentive (S21).

The collecting system 5 may also generates the collecting slip including at least the collecting code after receiving the collecting request and send a collecting container such as a collecting box, with the collecting slip attached, to the client 6. The collecting system also works out by a manner that the client having received the collecting container packs the used office supplies for which the collecting is requested in the collecting container to be dispatched to the collecting center 4.

In short, it is sufficient if the collecting code stored in the memory such as a barcode or alphanumeric character string for accessing the information (collecting data) on the kind and number (quantity) of the used office supplies to be collected and on the user is readably attached or recorded on the used office supplies to be collected or their packages.

Comparing the kind and number (quantity) of the supplies to be reused which are shown by the collecting data read out from the memory with the kind and number (quantity) of the supplies actually collected, the collecting data is corrected if there is a difference in the kind and number (quantity) or if there are the used office supplies impossible to be reused such as the one made by other makers or the like. Then, the collecting rate is calculated from the collecting data of the user stored in the memory (having been confirmed or corrected) and the record of the orders accepted (sale), and the incentive is set by referring to (or calculating) the table based on the calculated collecting rate.

In the series of collecting process in the above collecting center 4, in a work associated with the confirmation of the collecting goods in the step S19, comparison of the data read out from the collecting code with the goods actually collected may be carried out by a man, or of course may be automatically carried out using a device which utilizes image recognition to automatically read out the barcode or the like which carries the data of the kinds or the like concerning the used office supplies attached in advance to the used office supplies.

### [Arrangement of Collecting System]

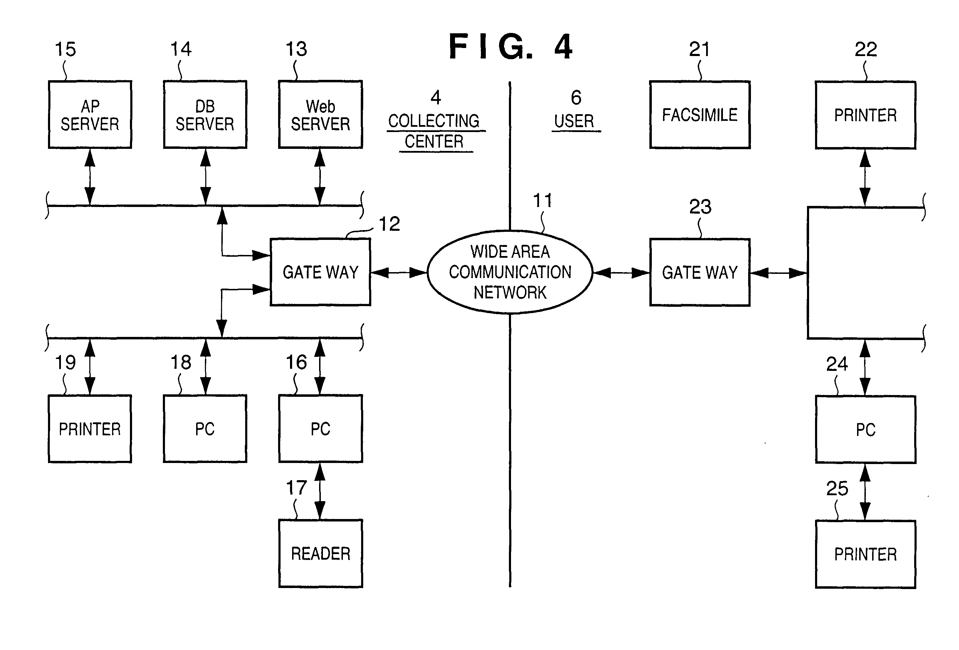

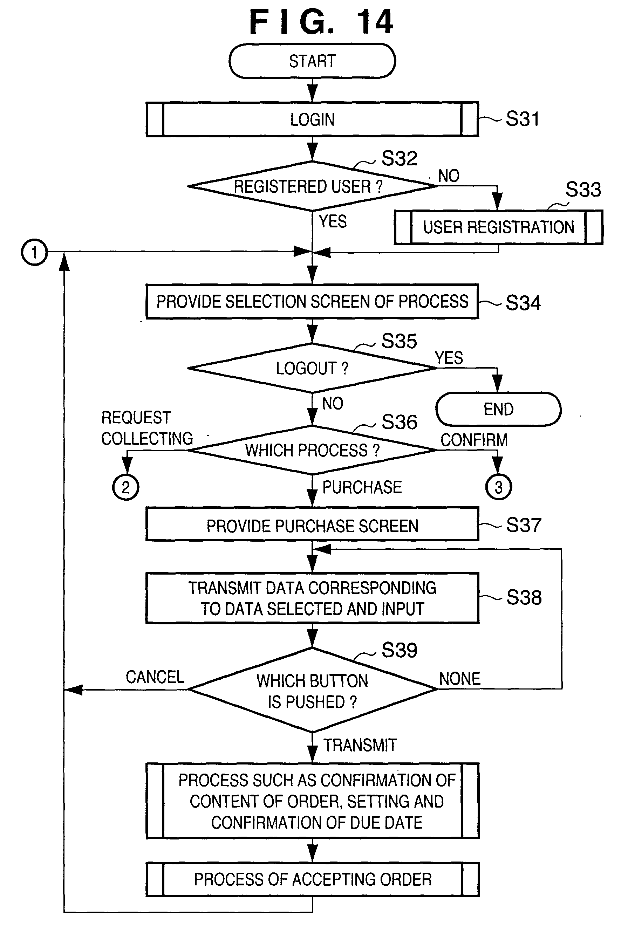

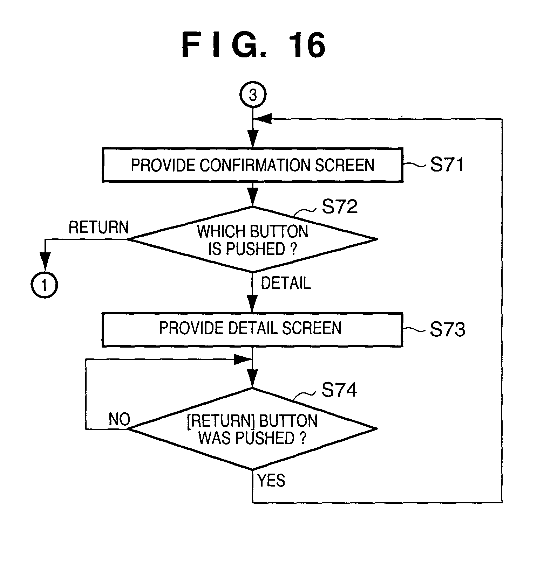

Fig. 4 is a block diagram showing an arrangement and connection of a network of the collecting center 4 and user 6, and Figs. 14 to 16 are flowcharts for explaining a process of a sale/collecting system. In this embodiment, the description is made on the system including the sale and collecting of the office supplies together, but it is extremely easy to utilize the sale system and/or collecting system 5 independent of the sale/collecting system.

A PC 24, Web server 13, DB server 14, AP server 15, PC 16 and PC 18, respectively, shown in Fig. 4 comprise at least arrangements which a typical computer comprises such as a Central Processing Unit (CPU), memory, communication part and the like, and each step mentioned below of the flowcharts shown in Figs. 14 to 16 is achieved by the fact that the CPU provided in each device reads out and carried out a program code stored in the memory. In Fig. 4, the server devices are functionally classified into plural devices, and in the description of each step of the flowcharts shown in Figs. 14 to 16, any of the devices carries out the process, but of course, physically both one device and plural devices can achieve the process of each step of the flowcharts shown in Figs. 14 to 16 if the devices logically have each function of the Web server 13, DB server 14, AP server 15, PC 16 and PC 18.

### • Login

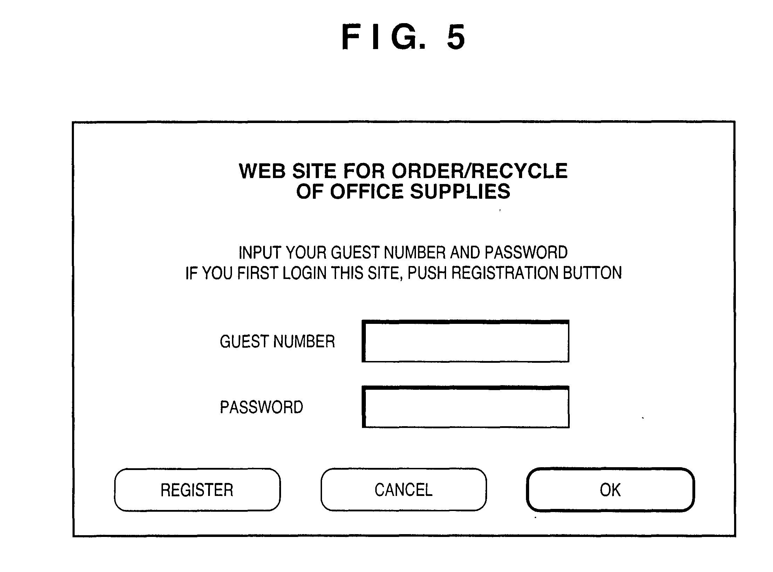

A left side in Fig. 4 shows a network system of the collecting center 4. The user 6 uses the personal computer (PC) 24 to access the Web server 13 which is a window of the sale/collecting system via gate ways 23 and 12 connected to a wide area communication network 11 such as the Internet and logs in (S31 in Fig. 14). The Web server 13 provides the PC 24 operated by the user 6 with a login screen shown in Fig. 5. The more proper expression is "provides the PC 24 with Hyper Text Markup Language (HTML) data for displaying a screen", but for easier description, it is described as "provides with a screen".

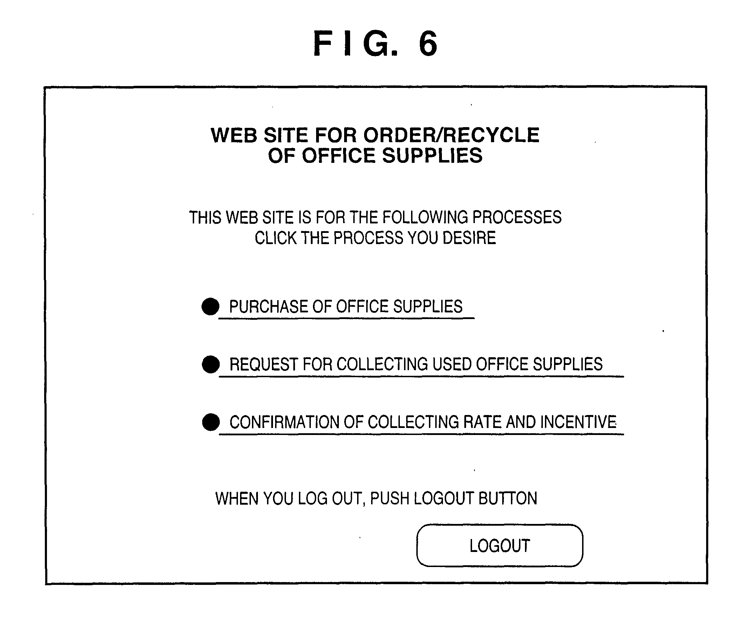

The Web server 13 requests a "Client Number (User Code)" and "Password" of the user 6 and passes the received data to the application (AP) server 15 in which a software is activated which plays a central role of the collecting system 5. The AP server 15 compares the input user code and password with the user data obtained by the database (DB) server 14 to certify that the user is registered (S32 in Fig. 14). When the user is registered, a selection screen of processes shown in Fig. 6 is provided to PC 24 via the Web server 13 (S34 in Fig. 14).

When the user 6 is unregistered, user registration can be effected by pushing a [Register] button of the screen in Fig. 5 (S33 in Fig. 14). In the user registration screen which description is omitted, the user 6 inputs necessary matters such as a name (corporate name), name of a person in charge when the user is a corporation, postal code, address, telephone number, facsimile number, e-mail address, name of the equipment used and the like. Such information is stored in the DB server 14 and the above mentioned user code and password are issued. The issue of the password to the user is carried out by e-mail, mail and the like.

### • Purchase of Office Supplies

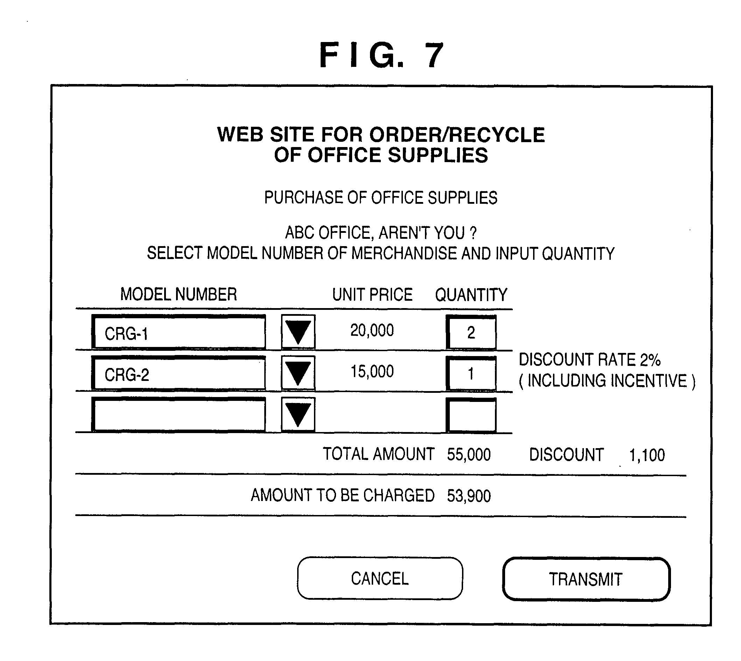

When "Purchase Office Supplies" is clicked in the screen of Fig. 6 (S36 in Fig. 14), the AP server 15 provides the PC 24 with a purchase screen of the office supplies shown in Fig. 7 via the Web server 13 (S37 in Fig. 14). The user 6 selects model numbers of the office supplies which the user desires to purchase and inputs the quantity. Fig. 7 shows an example when the model numbers of the cartridges "CRG-1" and "CRG-2" are input. The AP server 15 obtains from the DB server 14, a unit price corresponding to the input model number and a discount rate to a total amount to transmit them to the PC 24 so that the unit price and the discount rate are indicated in real time on the purchase screen (S38 in Fig. 14). The unit price corresponding to the input model number and the discount rate corresponding to the model number may be obtained from the DB server 14. The discount rate includes the above described incentive.

The user 6 lists goods desired to purchase, confirms their amount to be charged or the like, corrects the list if there is any change, and pushes a [Transmit] button shown in Fig. 7 (S39 in Fig. 14), then the order for the office supplies is completed. After that, the AP server 15 carries out processes such as confirmation of a content of the order, setting and confirmation of a due date (S40 in Fig. 14), and a process of accepting the order (S41 in Fig. 14), which detailed description is omitted since it has no direct relation to this embodiment.

Then, the process returns to the step S34 where the selection screen of the process shown in Fig. 6 is again provided to the PC 24 via the Web server 13. The user 6 pushes a [logout] button to log off when the desired process is finished (S35 in Fig. 14).

### • Request for Collecting

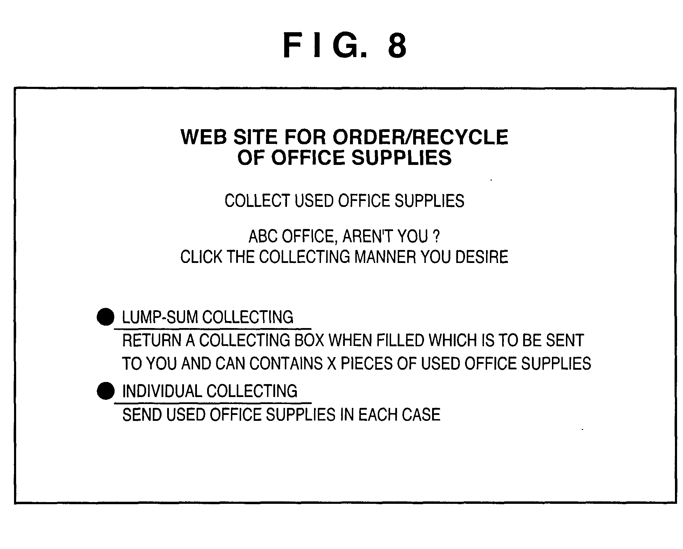

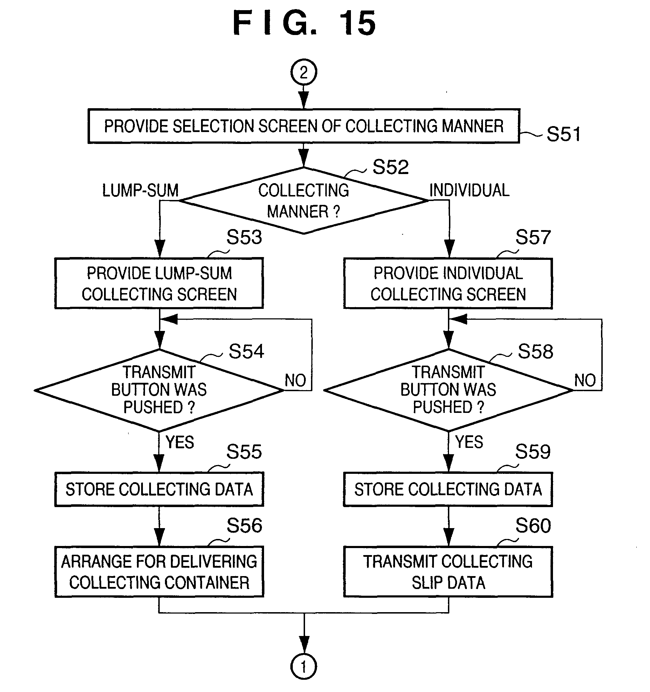

When "Request for Collecting of Used Business Supplies" is clicked in the screen of Fig. 6 (S36 in Fig. 14), the AP server 15 provides the PC 24 with a selection screen of collecting manners shown in Fig. 8 via the Web server 13 (S51 in Fig. 15). The user 6 can select the collecting manner as desired from a lump-sum collecting or an individual collecting and clicks either of them (S52 in Fig. 15). The AP server 15 has a recognizing function for recognizing that the user selects the lump-sum collecting or individual collecting and recognizes that the user selects the lump-sum collecting or individual collecting to provide the user with a screen corresponding to each of them via the Web server 13.

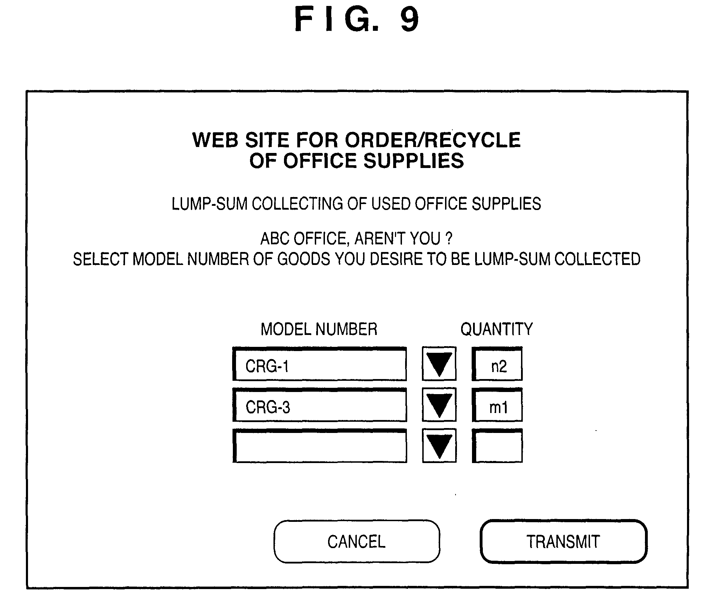

Fig. 9 shows a screen which is provided in a step S53 when the user 6 desires the lump-sum collecting. The user 6 selects the model number and quantity of the used office supplies desired for the lump-sum collecting and then pushes the [Transmit] button (S54). In Fig. 9, the AP server 15 in Fig. 4 stores "CRG-1, n" and "CRG-3, m" as the above described collecting data in the DB server 14 in Fig. 4 associated with the user 6 (n and m mean the quantity of the used office supplies to be contained in the collecting container) (S55).

Further, the AP server 15 in Fig. 4 arranges for sending the collecting container corresponding to the selected supplies to the user 6 (S56). More specifically, an invoice and the above described collecting slip are printed by a printer 19 in Fig. 4, and in accordance with the invoice, the collecting container with the collecting slip attached is dispatched to the user 6.

The client 6 stores the used office supplies in the collecting container and requests collecting of the collecting center 4 when the collecting container is filled. The above description has been made on the assumption that the client 6 desires the lump-sum collecting. However, when the information of the client such as a dealer which deals with large numbers of office supplies is recognized from the DB at the time of login of the request screen, the screen for the lump-sum collecting in Fig. 9 can be directly displayed after clicking "Request for Collecting of Used Business Supplies" in Fig. 6, thereby permitting reduction of a burden of the client.

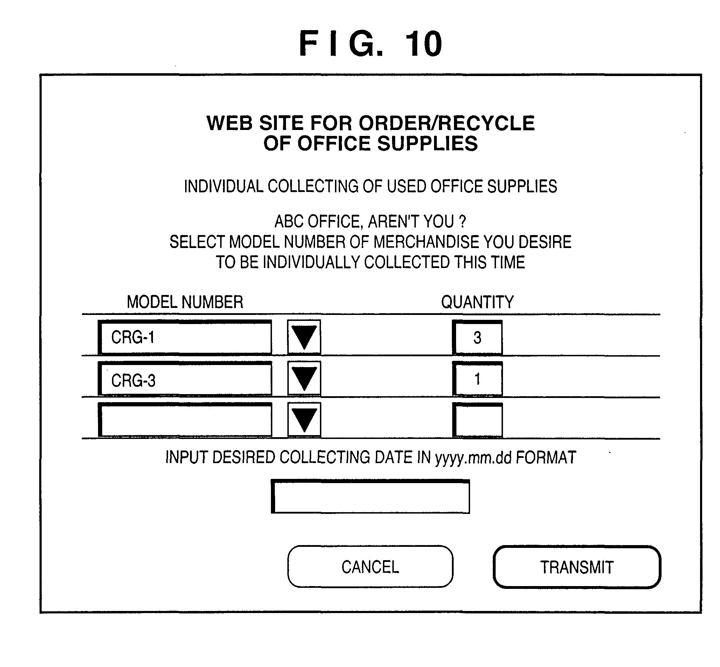

Fig. 10 shows a screen which is provided (displayed) in a step S57 when the client 6 desires the individual collecting. The client 6 selects the model number of the used office supplies desired for the individual collecting and inputs the quantity and desired collecting date and then pushes the [Transmit] button (S58). In Fig. 10, the AP server 15 in Fig. 4 stores "CRG-1, 1", "CRG-1, 1", "CRG-1, 1" and "CRG-3, 1" as the collecting data in the DB server 14 in Fig. 4 associated with the user 6 (S59). Further, the AP server 15 detects a collectable date close to the desired collecting date based on the data of the DB server 14. If the desired collecting date does not coincide with the collectable date, there is a procedure that the AP server 15 lists the collectable date close to the desired collecting date to be selected by the user 6, which detailed description is omitted.

When the expected collecting date is decided, the AP server 15 in Fig. 4 transmits a collecting slip data to the PC 24 for having the user 6 print the above described collecting slip (S60). If formed by the HTML data which is displayable by a browser or Graphics Interchange Format (GIF) image, the collecting slip data can be printed by the browser activated in the PC 24 by a printer 22 or 25. However, when printing with high resolution is required, such as in the case where the collecting data is indicated as a barcode, it is desirable to send the collecting slip data to the PC 24 as Portable Document Format (PDF) to be printed. The above description is made on the assumption that the user has the printer, however, in the case where the user has no printer, it is possible to have the user freely select obtaining manners of the collecting slip by providing a selection screen of transmitting the collecting slip data to the user of transmitting via the Internet or mailing the collecting slip generated by the collecting center. The AP server 15 recognizes the selection by the user and has the user obtain the collecting slip by either manner depending upon the recognition.

Then, the process returns to the step S34 where the selection screen of the process shown in Fig. 6 is again provided to the PC 24 via the Web server 13. The client 6 pushes the [logout] button to log off when the desired process is finished (S35).

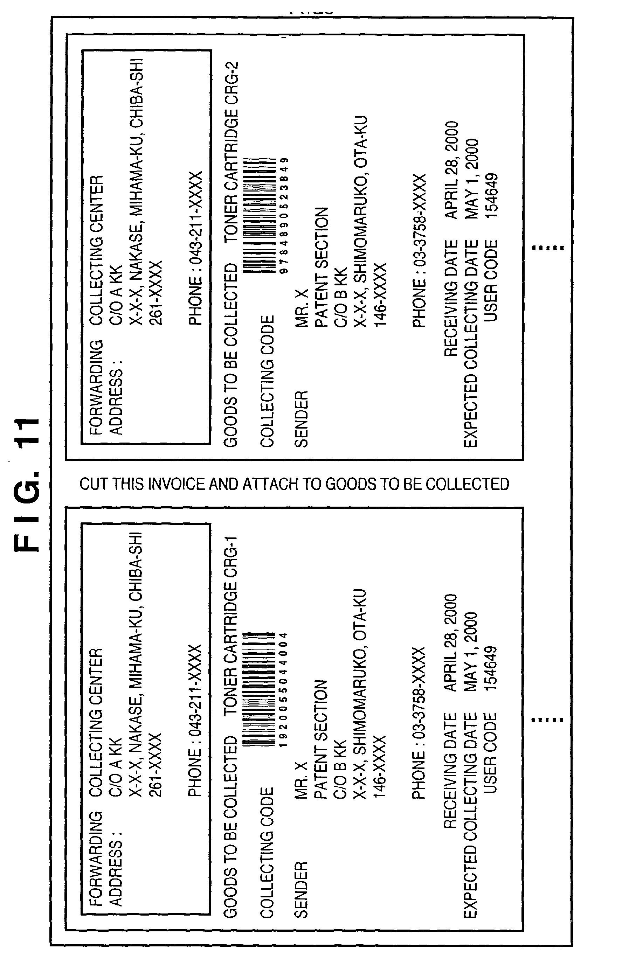

Fig. 11 shows the collecting slip printed by the collecting center or user. In Fig. 10, the number of the cartridges CRG-1 is three and CRG-3, one, so that three collecting slips for CRG-1 and one collecting slip for CRG-3 are printed. When the collecting slip is generated by the user, it is effective in printing the collecting slip to place a recording paper of A4 size coated with adhesive on its back side in a package box for the used office supplies. The size of the recording paper is not limited to A4 but the recording paper of any size such as B4 or A5 may be used which can be output by the printer.

The user 6 cuts the printed collecting slip and correctly attaches the collecting slip having been cut to the used office supply to be collected or its package box. Then, the preparation for the individual collecting is completed.

The above description is made on an example that the collecting center 4 prepares collecting service. This makes it possible to collect the used office supplies effectively utilizing the service for delivering the office supplies. The transporting manner of the used office supplies to the collecting center 4 is of course not limited to this.

### • Confirmation of Incentive or the Like

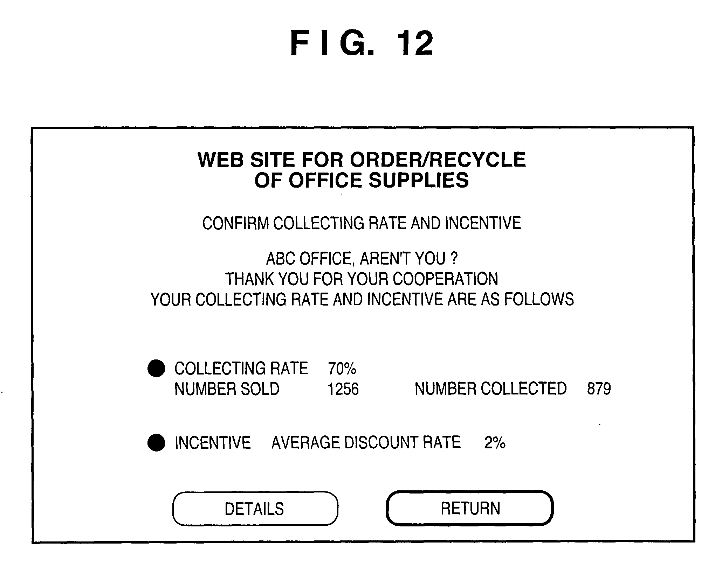

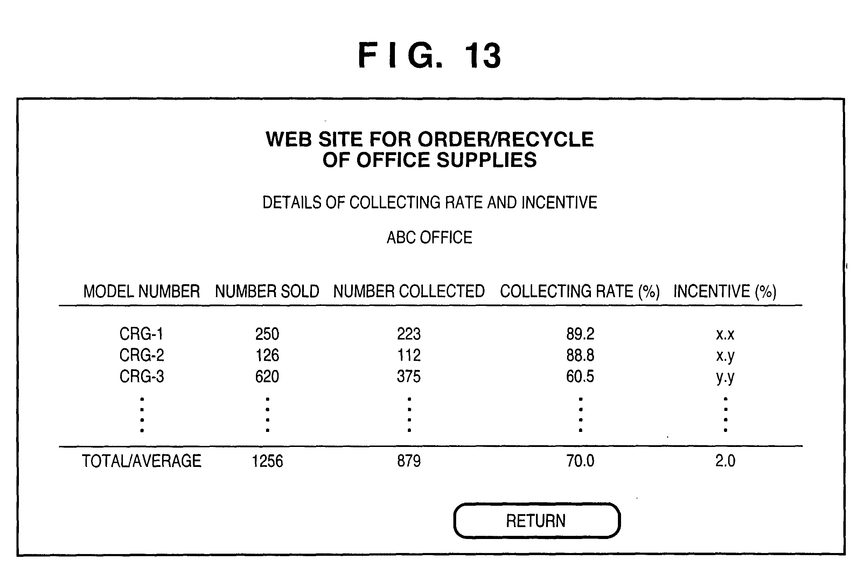

When "Confirm Collecting Rate and Incentive" is clicked in the screen of Fig. 6 (S36), the AP server 15 in Fig. 4 provides the PC 24 with a confirmation screen shown in Fig. 12 via the Web server 13 (S71). When desiring to see the detailed collecting rate and incentive, the user 6 pushes the [Detail] button (S72). When the [Detail] button is pushed, the AP server 15 provides the PC 24 with a detail screen shown in Fig. 13 via the Web server 13 (S73). When a [Return] button is pushed, the process returns to the step S34 where the selection screen of the process shown in Fig. 6 is again provided to the PC 24 via the Web server 13. The client 6 pushes the [logout] button to log off when the desired process is finished (S35).

Indicated in the confirmation screen shown in Fig. 12, are an average collecting rate and incentive, and indicated in the detail screen shown in Fig. 13 is a total average value of the collecting rate and incentive for respective office supplies from the user which orders have been often accepted so far and data with respect to each office supply.

### • Process after Collecting

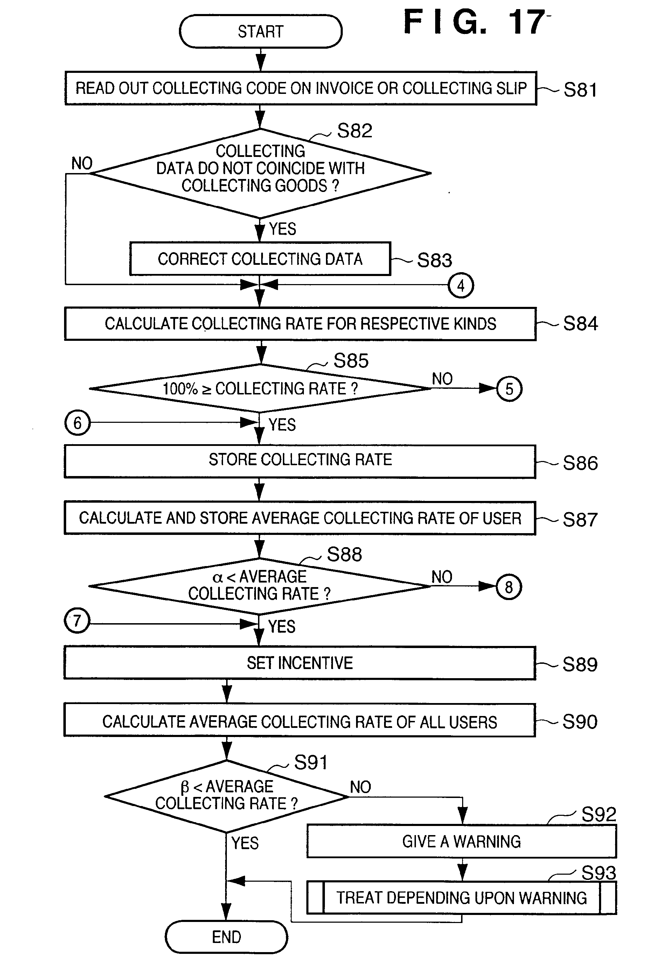

Fig. 17 is a flowchart showing a process of the collecting system 5 shown in Fig. 3 after arrival of the used office supplies. Here, the process of each step shown in Fig. 17 is realized by the fact that the CPU provided in the above described server device carries out a process based on a program code stored in a non-volatile memory of the server device placed in the collecting center 5. For the server device, the Web server 13, DB server 14, AP server 15 and PC 16 shown in Fig. 4 can be applied, or a server device logically having each function of the Web server 13, DB server 14, AP server 15 and PC 16 can be applied.

When the used office supply reaches the collecting center, the collecting code recorded on the collecting slip is read out (S81) to be input to the AP server 15. If the collecting code is the barcode, a reader 17 connected to the PC 16 shown in Fig. 4 reads out the barcode, which data is transmitted to the AP server 15.

The AP server 15 reads out the collecting data corresponding to the input collecting code from the DB server 14 to be provided to the PC 16 or 18. Displayed on the screen of the PC 16 or 18 is the information represented by the collecting data such as the name of the user, request date, expected collecting date, area and kind and quantity of the collecting goods so that it can be easily confirmed that the collecting data coincides with the collecting goods (S82). The confirmation of the content of the collecting goods may be carried out by a man, or may be carried out by using a device which utilizes the image recognition to automatically read out the barcode or the like attached to the used office supply on which the data concerning the used office supply is recorded. If the collecting data does not coincide with the collecting goods, the collecting data is corrected (S83).

Next, the AP server 15 in Fig. 4 calculates the collecting rate for respective kinds of the collecting goods (S84). Namely, accumulated collecting data of the user is read out from the DB server 14 and the accumulated collecting data is updated by the collecting data at this time. Further, the data of the orders accepted of the user is read out from the DB server 14 to calculate the collecting rate for respective kinds of the used office supply from the record of the quantity of shipping and the accumulated collecting data. Then, it is confirmed that there is the kind of the used office supply having the collecting rate of more than 100% (S85), and if all the rates are not more than 100%, they are stored in the DB server 14 as the collecting rates for respective kinds of the user (S86).

Then, The AP server 15 averages all the collecting rates for respective kinds of the user and calculates an average collecting rate of the user to be stored in the DB server 14 (S87). If the average collecting rate is more than a predetermined value α (S88), the incentive is set using an incentive conversion table mentioned below (S89).

Next, the AP server 15 calculates the average collecting rate of all the users (S90) and if the average collecting rate is more than a predetermined value β (S91), finishes the process. If the average collecting rate is less than the predetermined value β, the AP server 15 gives a warning (S92). The below mentioned treatment is carried out in compliance with the warning (S93).

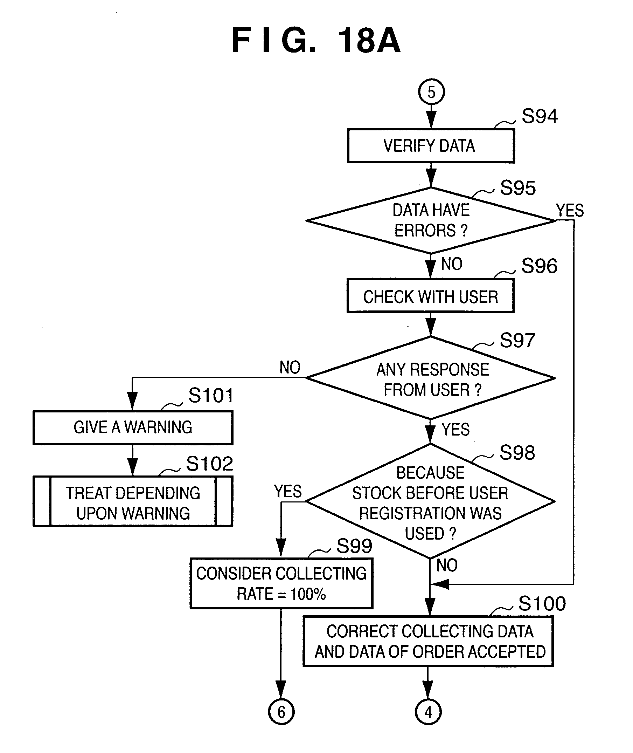

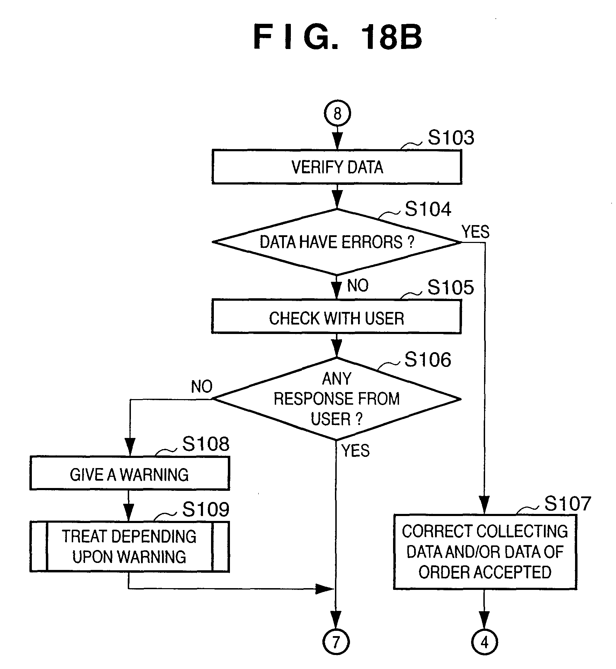

On the other hand, when there is the kind having the collecting rate of more than 100% in the step S85, the process is moved to the exception process shown in Figs. 18A and 18B. Here, likewise Fig. 17A, the process of each step shown in Figs. 18A and 18B is realized by the fact that the CPU provided in the above described server device carries out the process based on the program code stored in the non-volatile memory of the server device placed in the collecting center 5. For the server device, the Web server 13, DB server 14, AP server 15 and PC 16 shown in Fig. 4 can be applied, or the sever device logically having each function of the Web server 13, DB server 14, AP server 15 and PC 16 can be applied.

First, verification is conducted that there is any error in the collecting data stored in the DB server 14 (S94) and if there is an error in the data (S95), the collecting data stored in DB server 14 and/or data of orders accepted are corrected (S100), and the process returns to the step S84.

When there is no error in the collecting data stored in the DB server 14, detailed reason thereof is checked (S96). Namely, the e-mail with a questionnaire or the like attached is sent to the user to obtain an answer. The following reasons are considered as the reasons for the collecting rate of more than 100%. The reason (3) is stated on the assumption that a business place or post of a certain company is registered as the user while the used office supplies are taken off from other business place or post.

The reasons for the collecting rate of more than 100%
(1) The used office supplies having been owned by the user before registration are collected.
(2) The used office supplies sold by other route are collected.
(3) The used office supplies taken off from other places are collected.

If there is an answer from the user (S97), proper treatment is effected in response to the contents of the answer. For example, when the answer is the reason (1), there is no specific problem so that the process returns to the step S86 via the steps S97, S98 and S99. When the answer is the reasons (2) or (3), consulting with the user, the data is corrected (S100) and the process returns to the step S84.

If there is no answer from the user (S97), the warning is given (S101) and a manager or the like of the collecting system 5 checks the cause of obtaining no answer or the like (S102).

When the average collecting rate of the user is less than the predetermined value α in the step S88, the process is moved to the exception process shown in Fig. 18A. First, verification is conducted that there is any error in the collecting data stored in the DB server 14 (S103) and if there is an error in the data (S104), the collecting data stored in the DB server 14 and/or data of orders accepted are corrected (S107), and the process returns to the step S84.

When there is no error in the collecting data stored in the DB server 14, detailed reason thereof is checked (S105). Namely, the e-mail with a questionnaire or the like attached is sent to the user to obtain an answer.

The reason for the collecting rate less than α
(4) The used office supplies are disposed of.
(5) Other collecting route is used.

If there is the answer from the user (S106), in response to the content of the answer, collecting cooperation is requested or the reason for using other collecting route is checked separately to obtain the information for improving the collecting system 5 and its service.

Then, the process returns from the step S106 to step S89 without correcting the data.

If there is no answer from the user (S106), the warning is given (S108) and the manager or the like of the collecting system 5 checks the cause of obtaining no answer or the like (S109).

### [Countermeasure to Low Collecting Rate]

When it is detected that the average collecting rate is less than the predetermined value β of all the users in the step S91, it means that collecting by the collecting system 5 does not function sufficiently. In this case, a factor thereof is first checked and the treatment is effected in compliance with the result. For example, the collecting cooperation is requested or the promotion for promoting collecting (increasing a ratio of the incentive or the like when cooperating in collecting for a predetermined term) is effected to improve the average collecting rate.

The AP server 15 monitors not only the average collecting rate of all the users but also the average collecting rate for respective kinds of the used office supplies of all the users. When the average collecting rate for respective kinds becomes less than a predetermined value γ, the warning is given likewise. In this case, with respect to the target used office supplies, the collecting cooperation is requested or the promotion for promoting collecting (increasing the ratio of the incentive when cooperating in collecting the target used office supplies for the predetermined term) is effected to improve the average collecting rate.

The needs for improving the collecting rate of the specific kind arise in the case not only where the collecting rate is lowered but also where it is predicted that demand for the used office supplies of the specific kind is increased. Also in this case, the collecting cooperation is requested or the promotion for promoting the collecting (increasing the ratio of the incentive when cooperating in collecting the target used office supplies for the predetermined term) is effected to improve the average collecting rate.

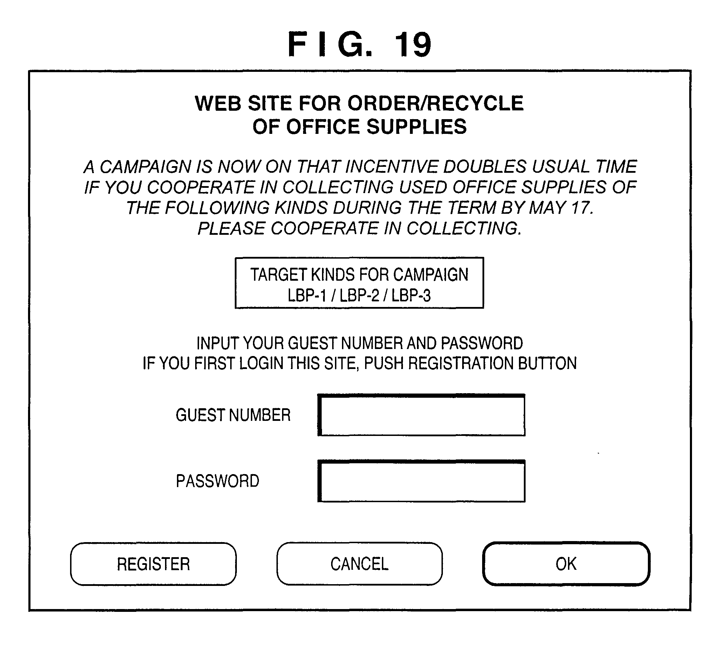

Fig. 19 is a view showing a login screen of a sale/collecting system during the promotion term for promoting collecting of the specific used office supply which is provided by the Web server 13 to a terminal device used by the user. Substantially the same login screen may be prepared in the case of improving the entire collecting rate. It is, of course, effective to indicate a banner for promotion on not only the login screen but also other screens.

Moreover, more flexible incentive can be provided by varying the above described promotion manner of the incentive for respective areas or countries.

### [Setting of Incentive]

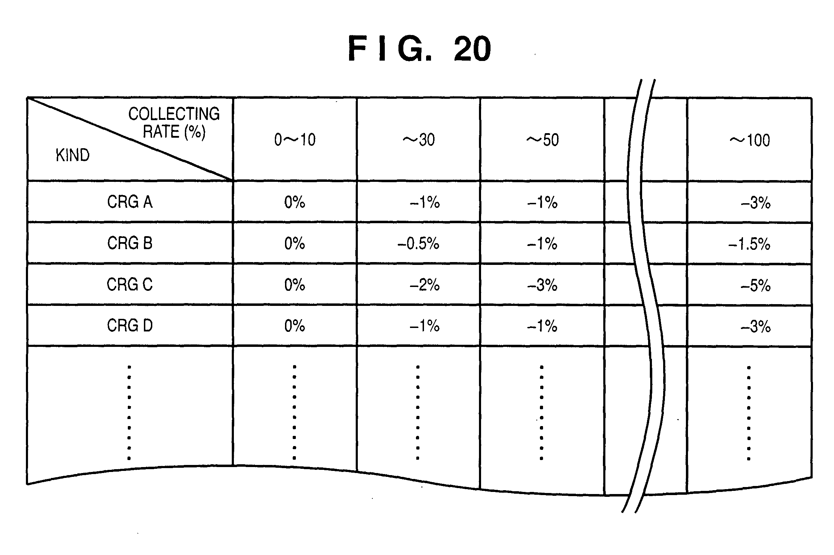

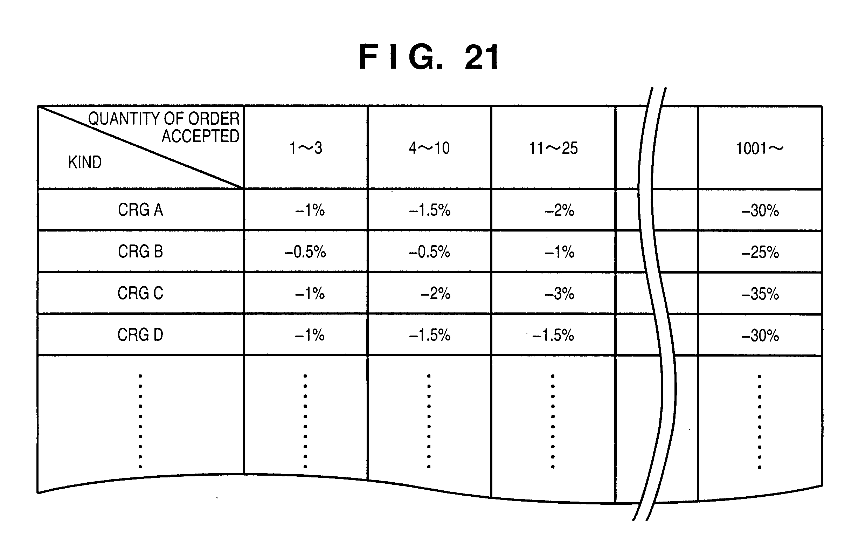

Fig. 20 shows a table of relationship of the collecting rate, kind of the office supply and incentive, and Fig. 21 shows a table of relationship between the quantity of orders accepted, kind of the office supply and discount rate. These tables are stored in the DB server 14.

The AP server 15 can refer to the table shown in Fig. 20 and obtain the incentive corresponding to the collecting rate for respective kinds of the office supplies. Then, the AP server 15 generates the data of the incentive value to be indicated on the confirmation screen shown in Figs. 12 and 13.

The AP server 15 can also refer to the table shown in Figs. 20 and 21 and obtain the collecting rate by office supplies and discount rate corresponding to the quantity of the orders accepted to thereby count the data and calculate the discount rate to the user. Then, the data of the value of the discount rate is generated which is to be indicated on the purchase screen shown in Fig. 7.

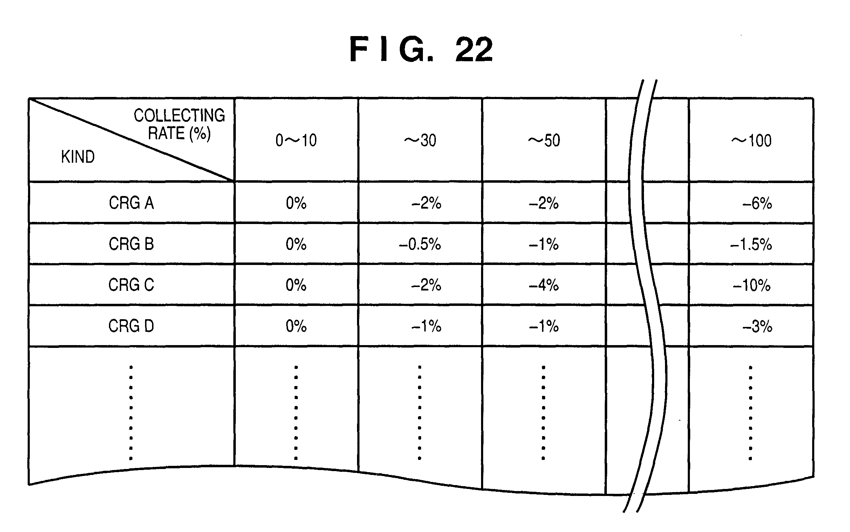

The above description was made on an example that the incentive and discount rate are decided in compliance with the collecting rate and transaction scale (charge, quantity) per a predetermined term. However, the incentive and discount rate may be decided by not only the collecting rate and quantity of the orders accepted but also the quantity of accumulated orders accepted, kind of equipment which the office supply accommodates, limited collecting term, collecting area and the like. In short, it is sufficient that the incentive and discount rate are decided such as to construct a system where the used office supply is effectively collected. For example, during the above described promotion term which improves the collecting rate, a table with a large incentive set as shown in Fig. 22 is used instead of the table shown in Fig. 20. Also the description is made on an example of the discount as the incentive to the user, but the incentive to the user may be in the form of providing presentation such that points are added depending upon the quantity or charge of the orders accepted and that one supply is provided to the user for free when certain amounts of points are accumulated.

### [Analysis of Shipping and Collecting Interval]

In the DB server 14 of the sale/collecting system described above, the data of the orders accepted and collecting data are accumulated for respective users and kinds of the office supplies. These data permit predicting the shipping and collecting interval for respective kinds of the office supplies.

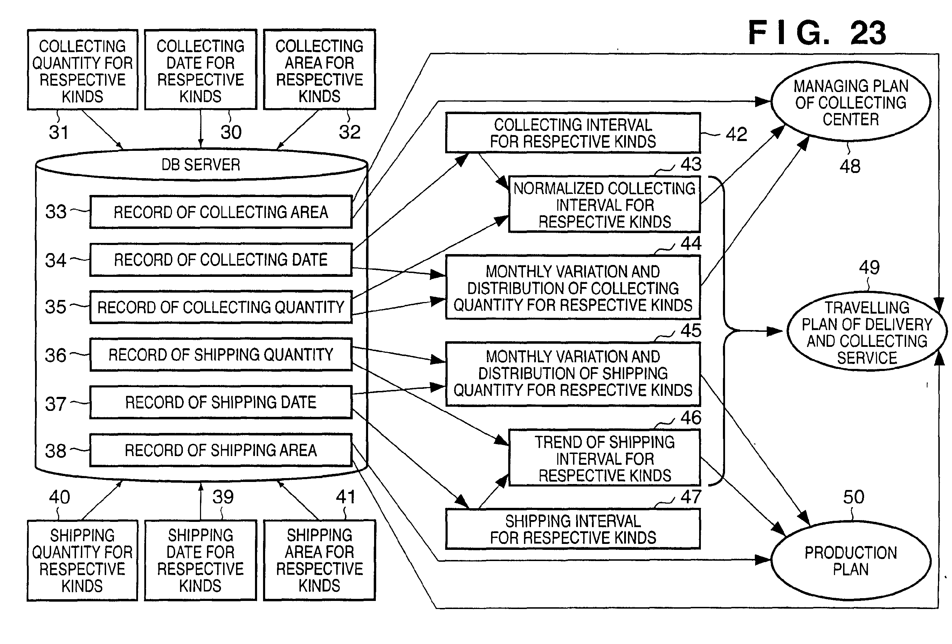

Fig. 23 is a view explaining a prediction sequence of the collecting and shipping.

By the processes from the steps S81 to S83 shown in Fig. 17, the collecting date 30, the collecting quantity 31 and collecting area 32 for respective kinds can be obtained. These are stored in the DB server 14 as the record 34 of collecting date, record 35 of collecting quantity and record 33 of collecting area separately from the above described collecting data.

Accordingly, by analyzing the record 34 of collecting date, the collecting interval 42 for respective kinds can be obtained such as "CRG-2; every three days". In addition, by incorporating the collecting interval 42 for respective kinds with the record 35 of collecting quantity, a normalized collecting interval 43 for respective kinds can be obtained such as "CRG-2; collected every 1.2 days per one".

From the record 34 of collecting date and record 35 of collecting quantity, monthly variation and distribution 44 of collecting quantity for respective kinds can be obtained. The normalized collecting interval 43, monthly variation and distribution 44 of collecting quantity and record 33 of collecting area for respective kinds as so obtained can be reflected on a managing plan 48 of the collecting center 4.

The same applies to shipping. By the processes from the steps S81 to S83 shown in Fig. 17, a shipping date 39, shipping quantity 40 and shipping area 41 for respective kinds can be obtained. These are stored in the DB server 14 as the record 37 of shipping date, record 36 of shipping quantity and record 38 of shipping area separately from the above described shipping data.

Accordingly, by analyzing the record 37 of shipping date, the shipping interval 47 for respective kinds can be obtained such as "CRG-3; every seven days". In addition, by incorporating the shipping interval 47 for respective kinds with the record 36 of shipping quantity, a trend 46 of the shipping interval for respective kinds can be obtained such as "CRG-2; ship one per 0.7 days".

From the record 37 of shipping date and record 36 of shipping quantity, monthly variation and distribution 45 of shipping quantities by respective kinds can be obtained. The trend 46 of the shipping interval, monthly variation and distribution 45 of shipping quantity and record 38 of shipping area for respective kinds as so obtained can be reflected on a production plan 50 of a manufacturer of the office supply.

Moreover, the data, record 33 of collecting area and record 38 of shipping area obtained by the above analysis are utilized in a travelling plan 49 of the service for delivering the office supply to the client and collecting the used office supply from the client to achieve an efficient travel.

In this way, according to the collecting system of the office supply of this embodiment, the collecting slip attached to the used office supply to be collected and the collecting code recorded on the collecting slip attached to the collecting container are read out to thereby permit accessing the corresponding collecting data.

Accordingly, counting of the data in the collecting center 4 collecting the used office supplies of various kinds, namely calculation of the collecting rate for respective kinds and calculation of average collecting rate can be facilitated and the incentive is immediately obtained from the obtained collecting rate by referring to the table to thereby permit remarkable improvement of working efficiency in the collecting center 4.

If the working efficiency is improved in the collecting center 4, of course, an improvement of the service to the user also becomes possible such as increasing of the incentive.

On the other hand, the user can count the data described above in shorter time and can immediately grasp the condition of the latest collecting cooperation so that the result of the collecting cooperation comes to be immediately reflected on the incentive. Consequently, more cooperation of the user can be obtained and the improvement of the collecting rate is expected.

Further, reduction of the collecting rate can be immediately detected to be treated so that the reduction of the collecting rate can be prevented. Especially, not only the reduction of the collecting rate of all the users and all the supplies but also the reduction of the collecting rate for respective users and office supplies can be detected, which permits carrying out the fine treatment as described above.

### [Example of Supplies]

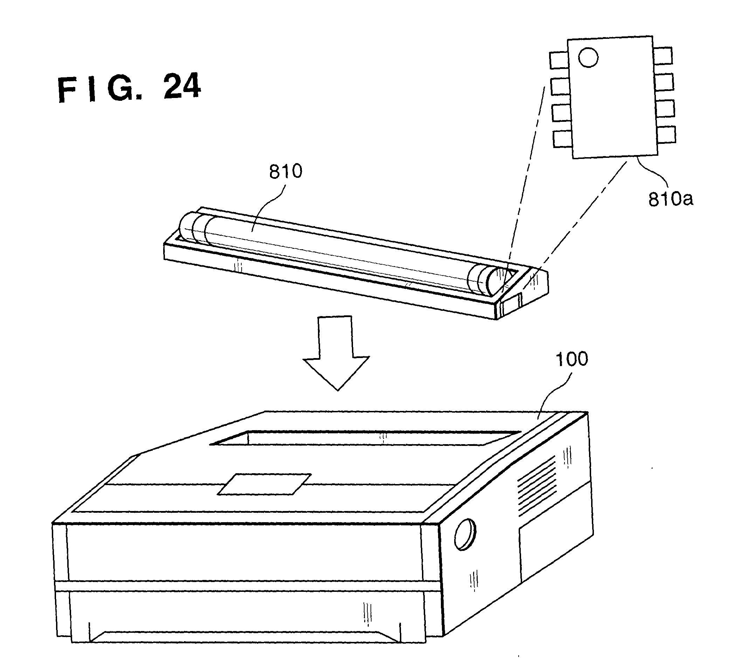

Fig. 24 is a view showing a cartridge 810 used in a printer 100.

A semiconductor memory 810a is incorporated in the cartridge 810. When the cartridge 810 is fitted to the printer 100, the semiconductor memory 810a is electrically connected to a controller of the printer 100 to be readable and writable.

Though not shown in Fig. 24, an indicating panel may be provided which indicates a type ID showing a type of the cartridge 810, serial number, total number of prints and remaining amount of toner and the like. Of course, the type ID and serial number are decided at the time of production and not changed so that they may be recorded on a casing of the cartridge 810 by printing or the like. On the other hand, the total number of prints and the remaining amount of toner vary depending upon use of the cartridge 810 so that the indicating panel is required for indicating them.

For the indicating panel, a liquid crystal indicating panel of compact size or the like can be used which includes its control circuit and a backup power supply. If utilizing an EEPROM or a flash memory as the semiconductor memory 810a and utilizing an indicating device such as an indicating panel using a ferroelectric liquid crystal which can maintain indicating when the power supply is cut off, the power may be externally (for example, from the printer 100) supplied only when the data of the semiconductor memory 810a is rewritten and even the backup power supply is unnecessary.

In this way, having the cartridge 810 per se hold and indicate identification information of the cartridge 810 such as the type ID and serial number permits carrying out identification of the cartridge 810 easily and precisely from its appearance or by reading out the data of the semiconductor memory 810a.

Moreover, having the cartridge 810 per se hold and indicate the information on the condition of use of the cartridge 810 such as the remaining amount of toner and number of prints allows determination whether that the cartridge is used or not be made easily and precisely from its appearance or by reading out the data in the semiconductor memory 810a.

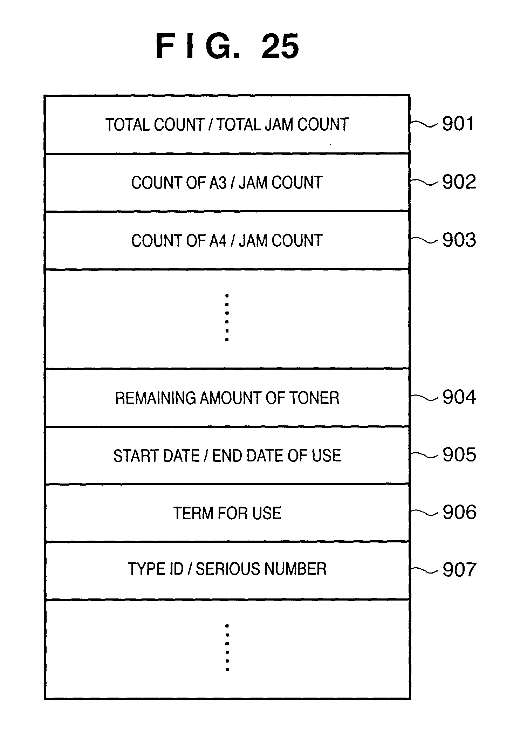

Fig. 25 shows the data stored in the memory 810a.

Stored in the memory 810a are data 901 showing the total number of prints printed using the cartridge 810 and the total number of jams, data 902 and 903 showing the number of prints and the number of jams for respective sizes of paper. In Fig. 10, the number of prints or number of paper is called "count". These data are counted up each time one page is printed by the printer 100 fitted with the cartridge 810.

Also stored in the memory 810a is the data 904 showing the remaining amount of toner. The data 904 may be a value showing the remaining amount of toner per se or may be a flag showing an output of a sensor for detecting reduction of the toner to a predetermined amount, so-called, a toner-low output.

Further stored in the memory 810a is data 905 showing start and end dates of use and data 906 showing the term of use. Usually provided in the printer 100 is a sensor for detecting opening and closing of a cover of a fitting portion of the cartridge. For example, when the opening and closing of the cover is detected, a controller in the printer 100 compares the serial number of the cartridge 810 stored in the non-volatile memory with the serial number read out from the cartridge 810 after detecting the cover, and if they do not coincide with each other, determines that the cartridge 810 is replaced. Then, the controller writes the data showing the date at that time as the start date of use in the memory 810a. In addition, at the time of power on or every 24 hours, data representing the date at that time is written in the memory 810a as the end date of use, as well as data representing the term of use is written in the memory 810a.

Moreover, stored in the memory 810a is data 907 written at the time of production or shipping of the cartridge 810 and showing the type ID and serial number which are the above described identification information. The data 907 may include data showing a service center where to make a contact at the time when the toner runs out.

### [Detailed Example of Device Where the Supplies are Used]

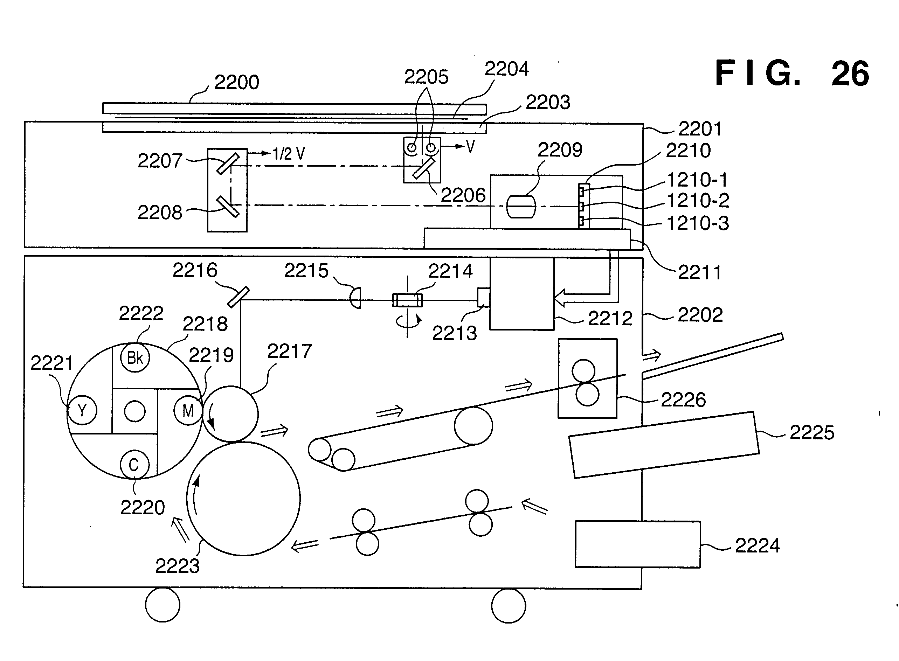

Fig. 26 is a schematic view showing a configuration of a laser beam printer (LBP) fitted with the office supply of this embodiment.

In Fig. 26, an image scanner 2201 reads out an original image and carries out a digital image process of the original image. A printer 2202 forms an image corresponding to the original image read out by the image scanner 2201 on a recording paper to be output.

In the image scanner 2201, reference numeral 2220 denotes a pressing plate of the original; 2203, a stand glass (platen glass) of the original, and the original 2204 is placed with its recording surface downward in the Figure to be fixed by the pressing plate 2200 of the original. Light output from the fluorescent lamp 2205 is reflected by the original 2204, introduced by mirrors 2206, 2207 and 2208 to focus the image by a lens 2209 on a linear CCD image sensor (hereinafter called "CCD") 2210. The lens 2209 is provided with a cutting filter of infrared light. The CCD 2210 separates reflected light of the original 2204 into each color of red (R), green (G) and blue (B) to be read out and sends an analog image signal obtained to an image processing portion 2211. Here, a unit having the fluorescent lamp 2205 and mirror 2206 is mechanically moved in a sub scanning direction perpendicular to the CCD 2210 at speed V, and a unit having mirrors 2207 and 2208 at speed V/2, so that the entire original 2204 is read out.

The CCD 2210 is, for example, in the form of three lines (1210-1 to 1210-3) of light receiving pixel with approximately 7500 pixel of each color of RGB and can read out 297 mm transversely of the original of A3 size at the resolution of 600 dpi. In order to read out 297 mm transversely of the original of A3 size at the resolution of 400 dpi, one-dimensional image sensor with approximately 5000 pixel of each color of RGB is sufficient.

An image processing portion 2211 converts the analog image signal which is output from the CCD 2210 into a digital image signal and forms images of each color component of yellow (Y), magenta (M), cyan (C) and black (BK) corresponding to the colors of the toners for printing to be sent to a printer 2202. One of the color component images YMCBK is sent to the printer 2202 per one scanning of the original (one sub scanning) in the image scanner 2201. Accordingly, by four times scanning of the original, the image signals of four color components are transmitted in turn to the printer 2202 to complete printing of one sheet. If there is enough memory in the image processing portion 2211, it is possible to store the image signal in the memory which is obtained by one scanning of the original and to dispense with the remaining three times scanning of the original.

The image signals of the color components of YMCBK transmitted in turn from the image processing portion 2211 in this manner are input to a laser driver 2212 in the printer 2202. The laser driver 2212 lights a laser diode 2213 in response to the input image signals. The laser beam output from the laser diode 2213 scans over a photosensitive drum 2217 through a polygon mirror 2214, f-θ lens 2215 and mirror 2216 to form an electrostatic latent image on the photosensitive drum 2217.

The electrostatic latent image on the photosensitive drum formed by the laser beam is developed by developing devices 2219 to 2222 having the toners of yellow, magenta, cyan and black. Namely, four developing devices 2219 to 2222 abut in turn against the photosensitive drum 2217 to effect developing by the color toners.

The recording paper supplied from recording paper cassettes 2224 or 2225 is wound around the transferring drum 2223 by the action of static electricity and the toner image on the photosensitive drum 2217 is transferred thereto. In a recording process using four color toners, the toner of each color is transferred to the recording paper in a superposed manner by four times rotations of the transferring drum 2223. Then, the recording paper is separated from the transferring drum 2223 and the toner image is fixed thereon in a fixing unit 2226 to be discharged out of the apparatus.

In such an LBP, the photosensitive drum 2217, toner or cartridge accommodated in developing devices 2219 to 2222, recording papers accommodated in the recording paper cassettes 2224 and 2225 are consumable supplies.

Though not shown in the figure, the laser beam printer shown in Fig. 26 is provided, for example, with an interface with an external device such as a personal computer and can print the image based on the image data sent from the external device on the recording medium.

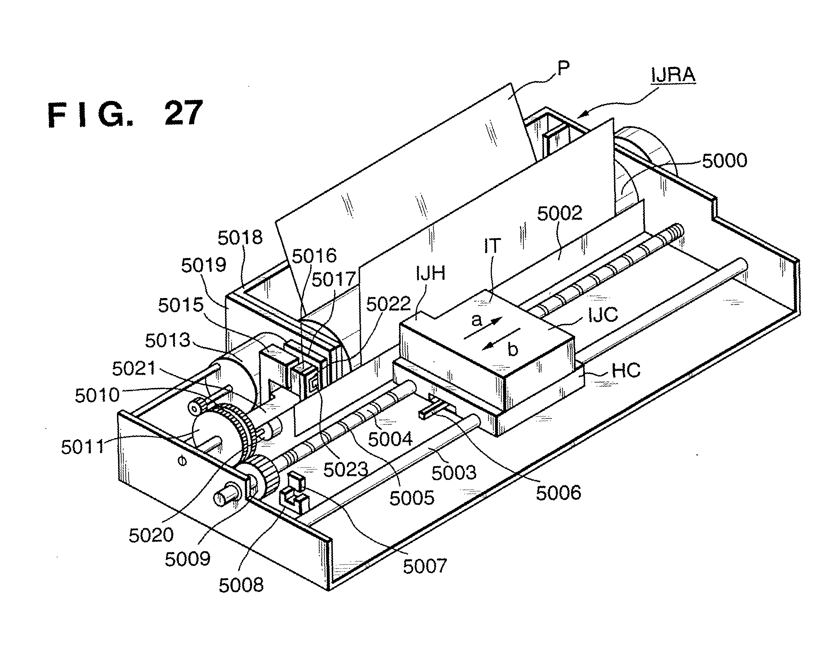

Fig. 27 is a schematic view showing a configuration of an inkjet printer (IJRA) fitted with the office supply of this embodiment.

In Fig. 27, a carriage HC, which works with a driving motor 5013 rotatably in a reverse direction and engages with a helical groove 5005 of a lead screw 5004 rotating via gears 5011 and 5009 for transmitting a driving force, has a pin (not shown) and is moved back and forth in directions of arrows a and b. The carriage HC is fitted with an ink jet cartridge IJC.

Reference numeral 5002 denotes a paper pressing plate, which presses the recording paper P against the platen 5000 across a moving direction of the carriage HC. Reference numerals 5007 and 5008 denote photo sensors which are detecting portions of a home position for confirming that there is a lever 5006 of the carriage HC in an area where the sensor is placed in order to switch a rotational direction of the driving motor 5013. Reference numeral 5016 denotes a member for supporting a cap member 5022 which caps a front of a recording head IJH; 5015, a sucking portion for sucking the inside of the cap, which restores sucking of the recording head IJH through an opening in the cap 5023.

Reference numeral 5017 denotes a cleaning blade; 5019, a member for enabling the blade to move back and forth, which are supported by a body support plate 5018. It is needless to say that the cleaning blade is not limited to this form but that the known cleaning blade can be applied to this embodiment. Reference numeral 5021 denotes a lever for starting sucking in sucking restoration, which moves with movement of a cam 5020 engaging with the carriage HC and by which a driving force from the driving motor 5013 is controlled at a known communication portion such as a clutch switching.

The above described capping, cleaning and sucking restoration are adapted to carry out desired processes at their corresponding position by the action of the lead screw 5004 when the carriage HC comes to the area of the home position side, however, it is sufficient to have them carry out desired operation at known timings.

In such an IJRA, the ink jet cartridge IJC and ink fitted therein are the consumable supplies.

### <Other Embodiment>

The present invention can be applied to a system constituted by a plurality of devices (e.g., host computer, interface, reader, printer) or to an apparatus comprising a single device (e.g., copying machine, facsimile machine).

Further, the object of the present invention can be also achieved by providing a storage medium storing program codes for performing the aforesaid processes to a system or an apparatus, reading the program codes with a computer (e.g., CPU, MPU) of the system or apparatus from the storage medium, then executing the program.

In this case, the program codes read from the storage medium realize the functions according to the embodiment, and the storage medium storing the program codes constitutes the invention.

Further, the storage medium, such as a floppy disk, a hard disk, an optical disk, a magneto-optical disk, CD-ROM, CD-R, a magnetic tape, a non-volatile type memory card, and ROM can be used for providing the program codes.

Furthermore, besides aforesaid functions according to the above embodiment are realized by executing the program codes which are read by a computer, the present invention includes a case where an OS (operating system) or the like working on the computer performs a part or entire processes in accordance with designations of the program codes and realizes functions according to the above embodiment.

Furthermore, the present invention also includes a case where, after the program codes read from the storage medium are written in a function expansion card which is inserted into the computer or in a memory provided in a function expansion unit which is connected to the computer, CPU or the like contained in the function expansion card or unit performs a part or entire process in accordance with designations of the program codes and realizes functions of the above embodiment.

In a case where the present invention is applied to the aforesaid storage medium, the storage medium stores program codes corresponding to the flowcharts described in the embodiment. Briefly, the storage medium stores each module shown as an example of a memory map in the above.

Counting of data, namely calculation of collecting rate for respective users or kinds in a collecting center which collects various kinds of used office supplies is extremely complex and troublesome. For this reason, a client who requests collecting accesses a collecting system and requests collecting of the used office supplies. The collecting system stores collecting data of the kind and quantity of the used office supplies to be collected associated with users in a memory and transmits a collecting code corresponding to the collecting data to the client. The client generates a collecting slip including the collecting code received and dispatches the used office supplies with the collecting slip attached to the collecting center. The collecting center reads out the collecting code recorded on the collecting slip attached to the used office supplies dispatched and calculates the collecting rate for respective users and used office supplies based on the collecting code.

## Claims

1. A collecting apparatus for collecting used office supplies comprising:
a receiver, arranged to receive a request for collecting the used office supplies from a client;
a controller, arranged to have collecting data concerning the used office supplies requested for collecting stored in a memory with the data associated with said client; and
an issuer, arranged to issue a collecting code for accessing the collecting data stored in said memory.

2. The apparatus according to claim 1, further comprising a generator, arranged to generate a collecting slip, with said collecting code recorded, to be dispatched to said client.

3. The apparatus according to claim 2, wherein said collecting slip is attached to a collecting container.

4. The apparatus according to claim 3, wherein said collecting container accommodates a predetermined quantity of the used office supplies to be collected.

5. The apparatus according to claim 4, wherein said collecting slip is collected together with the collecting container which accommodates the used office supplies.

6. The apparatus according to claim 1, further comprising:
a reader, arranged to read out a collecting code recorded on the collecting slip attached to the collecting container collected;
a comparater, arranged to compare a kind and quantity of the used office supplies shown by the collecting data corresponding to the collecting code read out with the kind and quantity of the used office supplies collected; and
a corrector, arranged to correct said collecting data when result of the comparison does not show coincidence.

7. The apparatus according to claim 1, further comprising a transmitter, arranged to transmit said collecting code to said client.

8. The apparatus according to claim 7, wherein transmitting of said collecting code is carried out via the Internet.

9. The apparatus according to claim 7, wherein the collecting code is transmitted to said client so that the client generates the collecting slip.

10. The apparatus according to claim 9, wherein said collecting slip is attached to the used office supplies to be collected.

11. The apparatus according to claim 10, further comprising:
a reader, arranged to read out a collecting code recorded on the collecting slip attached to the used office supplies collected;
a comparater, arranged to compare a kind and quantity of the used office supplies shown by the collecting data corresponding to the collecting code read out with the kind and quantity of the used office supplies collected; and
a corrector, arranged to correct said collecting data when result of the comparison does not show coincidence.

12. The apparatus according to claim 11, further comprising a recorder, arranged to calculate a collecting rate of the used office supplies for respective users and/or kinds of the used office supplies and to recorded in said memory after completion of a process by said comparater or corrector.

13. The apparatus according to claim 12, further comprising a determinater, which determines incentive to be provided to the client for respective clients and/or kinds of the used office supplies in compliance with the collecting rate of the used office supplies.

14. The apparatus according to claim 13, wherein said incentive is determined based on an incentive setting table stored in said memory.

15. The apparatus according to claim 13, further comprising an indicator which presents information of the collecting rate calculated and/or incentive determined to said client.

16. The apparatus according to claim 12, further comprising an analyzer, arranged to analyze a collecting trend for respective kinds of the used office supplies based on the collecting rate recorded.

17. The apparatus according to claim 12, wherein a request for collecting said used office supplies is carried out via the Internet.

18. A collecting method of collecting used office supplies comprising the steps of:
receiving a request for collecting the used office supplies from a client;
having collecting data concerning the used office supplies requested for collecting stored in a memory with the data associated with said client; and
issuing a collecting code for accessing the collecting data stored in said memory.

19. The method according to claim 18, further comprising the step of generating a collecting slip, with said collecting code recorded therein, to be dispatched to said client.

20. The method according to claim 19, wherein said collecting slip is attached to a collecting container.

21. The method according to claim 20, wherein said collecting container accommodates a predetermined quantity of the used office supplies to be collected.

22. The method according to claim 21, wherein said collecting slip is collected together with the collecting container which accommodates the used office supplies.

23. The method according to claim 19, further comprising the steps of:
reading out a collecting code recorded on the collecting slip attached to the collecting container collected;
comparing a kind and quantity of the used office supplies shown by the collecting data corresponding to the collecting code read out with the kind and quantity of the used office supplies collected; and
correcting said collecting data when result of the comparison does not show coincidence.

24. The method according to claim 18, further comprising the step of transmitting said collecting code to said client.

25. The method according to claim 24, wherein transmitting of said collecting code is carried out via the Internet.

26. The method according to claim 24, wherein the collecting code is transmitted to said client so that the client generates the collecting slip.

27. The method according to claim 26, wherein said collecting slip is attached to the used office supplies to be collected.

28. The method according to claim 27, further comprising the steps of:
reading out the collecting code recorded on the collecting slip attached to the collecting container collected;
comparing the kind and quantity of the used office supplies shown by the collecting data corresponding to the collecting code read out with the kind and quantity of the used office supplies collected; and
correcting said collecting data when result of the comparison does not show coincidence.

29. The method according to claim 28, further comprising the step of calculating a collecting rate of the used office supplies for respective clients and/or kinds of the used office supplies to be recorded in said memory after completion of said comparing or correcting.

30. The method according to claim 29, further comprising the step of determining incentive to be provided to the client for respective clients and/or kinds of the used office supplies in compliance with the collecting rate of the used office supplies.

31. The method according to claim 30, wherein said incentive is determined based on an incentive setting table stored in said memory.

32. The method according to claim 30, further comprising the step of presenting information of the collecting rate calculated and/or the incentive determined to said client.

33. The method according to claim 29, further comprising the step of analyzing a collecting trend for respective kinds of the used office supplies based on the collecting rate recorded.

34. The method according to claim 18, wherein a request for collecting said used office supplies is carried out via the Internet.

35. A collecting apparatus for collecting used office supplies comprising:
a controller, arranged to have collecting data stored in a memory concerning the used office supplies which is input and transmitted via the Internet by the client in an input screen provided by said apparatus;
an issuer, arranged to issue a collecting code for accessing the collecting data stored in said memory; and
an indicator, arranged to indicate the collecting data which is accessed with said collecting code collected together with said used office supplies in order to confirm that the used office supplies collected from said client coincide with the collecting data stored in said memory.

36. The apparatus according to claim 35, further comprising a provider, arranged to provide the incentive based on the collecting data stored in said memory and result of said confirmation.

37. The apparatus according to claim 36, wherein said collecting data is stored in said memory with associated with the client.

38. The apparatus according to claim 37, wherein said collecting data is associated with information on a name and/or place of said client.

39. The apparatus according to claim 35, further comprising a calculator, arranged to calculate the collecting rate based on the collecting data stored in said memory.

40. The apparatus according to claim 35, further comprising an analyzer, arranged to analyze a collecting trend based on the collecting data stored in said memory.

41. The apparatus according to claim 35, further comprising a recognition unit, arranged to recognize a collecting manner of the used office supplies selected by said client, wherein said collecting manner includes at least an individual collecting and a lump-sum collecting.

42. The apparatus according to claim 41, wherein the lump-sum collecting is automatically selected based on the collecting data stored in association with said client.

43. The apparatus according to claim 36, wherein the provider provides information on the indication for confirming the incentive to said client via the Internet.

44. The apparatus according to claim 39, wherein the provider provides information on the indication for confirming said collecting rate to said client via the Internet.

45. The apparatus according to claim 35, wherein said collecting data includes the kind and/or quantity of the used office supplies and wherein said providing of the incentive differs depending upon the respective kinds and/or quantities of the used office supplies.

46. The apparatus according to claim 36, wherein said providing of the incentive is carried out for the respective clients.

47. The apparatus according to claim 36, wherein said providing of the incentive differs depending upon terms.

48. The apparatus according to claim 36, wherein said providing of the incentive differs depending upon areas where the clients are located.

49. The apparatus according to claim 36, wherein said incentive is a discount rate of prices of the used office supplies which the client desires to purchase.

50. The apparatus according to claim 36, wherein said incentive includes providing additional points to the client, permitting discount of the prices of the used office supplies which the client desires to purchase or presentation of the used office supplies desired by the client with respect to accumulation of a predetermined number of the points.

51. The apparatus according to claim 35, wherein said collecting code collected together with said used office supplies is attached to or recorded on the used office supplies or attached to or recorded on the collecting container which accommodates the used office supplies.

52. The apparatus according to claim 36, wherein said used office supplies include business supplies.

53. The apparatus according to claim 52, wherein said business supplies include cartridges and ink containers.

54. The apparatus according to claim 35, wherein said client includes a user and collecting agent.

55. The apparatus according to claim 35, further comprising a transmitter, arranged to transmit the collecting code for accessing the collecting data stored in said memory.

56. A collecting apparatus for collecting used office supplies comprising:
a controller, arranged to have collecting data stored in a memory concerning the used office supplies which is input and transmitted via the Internet by the client in an input screen provided by said apparatus; and
a transmitter, arranged to transmit the collecting code for accessing the collecting data stored in said memory; and
an indicator, arranged to indicate the collecting data which is accessed with said collecting code collected together with said used office supplies in order to confirm that the used office supplies collected from said client coincide with the collecting data stored in said memory.

57. The apparatus according to claim 56, further comprising a provider, arranged to provide the incentive based on the collecting data stored in said memory and result of said confirmation.

58. The apparatus according to claim 56, wherein the collecting code is transmitted by the transmitter so that the client generates the collecting slip.

59. The apparatus according to claim 56, wherein the controller recognizes selection of transmitting said collecting code by said client and has the transmitter transmit said collecting code to said client when recognizing the selection of transmitting.

60. A collecting apparatus for collecting used office supplies comprising:
an issuer, arranged to issue a collecting code associated with the collecting data concerning the used office supplies requested for collecting; and
a provider, arranged to provide the incentive based on said collecting code which is collected together with the used office supplies collected from the client.

61. A collecting method of collecting used office supplies comprising the steps of:
having collecting data stored in a memory concerning the used office supplies which is input and transmitted via the Internet by the client in an input screen provided by the collecting apparatus;
issuing a collecting code for accessing the collecting data stored in said memory; and
indicating the collecting data which is accessed with said collecting code collected together with said used office supplies in order to confirm that the used office supplies collected from said client coincide with the collecting data stored in said memory.

62. The method according to claim 61, further comprising the step of providing the incentive based on the collecting data stored in said memory and result of said confirmation.

63. The method according to claim 61, wherein said collecting data is stored in said memory with associated with the client.

64. The method according to claim 63, wherein said collecting data is associated with information on a name and/or place of said client.

65. The method according to claim 61, further comprising the step of calculating the collecting rate based on the collecting data stored in said memory.

66. The method according to claim 61, further comprising the step of analyzing a collecting trend based on the collecting data stored in said memory.

67. The method according to claim 61, further comprising the step of recognizing a collecting manner of the used office supplies selected by said client, wherein said collecting manner includes at least an individual collecting and a lump-sum collecting.

68. The method according to claim 67, wherein the lump-sum collecting is automatically selected based on the collecting data stored in association with said client.

69. The method according to claim 62, wherein the information on the indication for confirming the incentive is provided to said client via the Internet.

70. The method according to claim 62, wherein the information on the indication for confirming said collecting rate is provided to said client via the Internet.

71. The method according to claim 61, wherein said collecting data includes the kinds of the used office supplies.

72. The method according to claim 61, wherein said collecting data includes the quantities of the used office supplies.

73. The method according to claim 62, wherein said providing of the incentive is carried out for the respective clients.

74. The method according to claim 62, wherein said providing of the incentive differs depending upon the kinds of the used office supplies.

75. The method according to claim 62, wherein said providing of the incentive differs depending upon the quantities of the used office supplies.

76. The method according to claim 62, wherein said providing of the incentive differs depending upon terms.

77. The method according to claim 62, wherein said providing of the incentive differs depending upon areas where the clients are located.

78. The method according to claim 62, wherein said incentive is a discount rate of prices of the used office supplies which the client desires to purchase.

79. The method according to claim 62, wherein said incentive includes providing additional points to the client, permitting discount of the prices of the used office supplies which the client desires to purchase or presentation of the used office supplies desired by the client with respect to accumulation of a predetermined number of the points.

80. The method according to claim 61, wherein said collecting code collected together with said used office supplies is attached to or recorded on the used office supplies or attached to or recorded on the collecting container which accommodates the used office supplies.

81. The method according to claim 61, wherein said used office supplies include business supplies.

82. The method according to claim 81, wherein said business supplies include cartridges and ink containers.

83. The method according to claim 61, wherein said client includes a user and collecting agent.

84. The method according to claim 61, further comprising the step of transmitting the collecting code for accessing the collecting data stored in said memory.

85. A collecting method of collecting used office supplies comprising the steps of:
having collecting data stored in a memory concerning the used office supplies which is input and transmitted via the Internet by the client in an input screen provided by the collecting apparatus;
transmitting the collecting code for accessing the collecting data stored in said memory; and
indicating the collecting data which is accessed with said collecting code collected together with said used office supplies in order to confirm that the used office supplies collected from said client coincide with the collecting data stored in said memory.

86. The method according to claim 85, further comprising the step of providing the incentive based on the collecting data stored in said memory and result of said confirmation.

87. The method according to claim 85, wherein the collecting code is transmitted so that the client generates the collecting slip.

88. The method according to claim 85, further comprising the steps of:
recognizing selection of transmitting said collecting code by said client; and
transmitting said collecting code to said client when the selection of transmitting is recognized.

89. A collecting method for collecting used office supplies comprising the steps of:
issuing a collecting code associated with the collecting data concerning the used office supplies requested for collecting; and
providing the incentive based on said collecting code which is collected together with the used office supplies collected from the client.

90. A computer program product comprising a computer readable medium having a computer program code for a control method which controls a collecting apparatus for collecting used office supplies, comprising program codes for:
receiving a request for collecting the used office supplies from a client;
having collecting data concerning the used office supplies requested for collecting stored in a memory with the data associated with said client; and
issuing a collecting code for accessing the collecting data stored in said memory.

91. A computer program product comprising a computer readable medium having a computer program code for a control method which controls a collecting apparatus for collecting used office supplies, comprising program codes for:
having collecting data stored in a memory concerning the used office supplies which is input and transmitted via the Internet by the client in an input screen provided by the collecting apparatus;
issuing a collecting code for accessing the collecting data stored in said memory; and
indicating the collecting data which is accessed with said collecting code collected together with said used office supplies in order to confirm that the used office supplies collected from said client coincide with the collecting data stored in said memory.

92. A computer program product comprising a computer readable medium having a computer program code for a control method which controls a collecting apparatus for collecting used office supplies, comprising program codes for:
having collecting data stored in a memory concerning the used office supplies which is input and transmitted via the Internet by the client in an input screen provided by the collecting apparatus;
transmitting the collecting code for accessing the collecting data stored in said memory; and
indicating the collecting data which is accessed with said collecting code collected together with said used office supplies in order to confirm that the used office supplies collected from said client coincide with the collecting data stored in said memory.

93. A computer program product comprising a computer readable medium having a computer program code for a control method which controls a collecting apparatus for collecting used office supplies, comprising program codes for:
issuing a collecting code associated with the collecting data concerning the used office supplies requested for collecting; and
providing the incentive based on said collecting code which is collected together with the used office supplies collected from the client.

94. A collecting apparatus for collecting used office supplies comprising:
an updater, arranged to update client's collecting data of the used office supplies which is accumulated in a memory for respective clients;
a calculator, arranged to calculate information on incentive in compliance with the collecting data updated by the updater; and
a provider, arranged to provide information on an order screen by which said client orders the used office supplies, wherein said information on the order screen includes said information on the incentive.

95. A collecting apparatus for collecting used office supplies comprising:
a reader, arranged to read a collecting code which is sent together with the used office supplies and includes at least information on kinds of the used office supplies;
a manager arranged to manage a collecting condition of the used office supplies in compliance with the collecting code read by the reader; and
a provider, arranged to provide information for indicating the collecting condition managed by the manager to a computer externally connected via the Internet.

96. A collecting apparatus for collecting used office supplies comprising:
a provider, arranged to provide a computer communicably connected, with information on a screen for requesting collecting of the used office supplies, at least for inputting the information which identifies the kind of said used office supplies; and
an informer, arranged to inform said computer of a collecting code including the information which is input via an indicating screen based on said information on the screen and identifies the kind of said used office supplies.

97. The apparatus according to claim 96, further comprising a recognition unit, arranged to recognize client ID transmitted from the computer communicably connected, wherein said collecting code includes information for recognizing said client.

98. The apparatus according to claim 97, wherein said collecting code is to be printed, and a medium on which said collecting code is printed is delivered to the collecting center together with a collecting box for delivering said used office supplies, and the manager manages the collecting condition for said client based on the information for the collecting code read by the reader.

99. An information processing apparatus for receiving a request to collect used office supplies comprising:
a receiver, arranged to receive information on a request for collecting including information on at least the kind and quantity of said used office supplies which is transmitted from the computer connected via the Internet;
a generator, arranged to generate the collecting code including information on at least the kind and quantity of said used office supplies based on the information on the request for collecting received by the receiver; and
a transmitter, arranged to transmit the collecting code generated by the generator to said computer.

100. A collecting method of collecting used office supplies comprising the steps of:
updating client's collecting data of the used office supplies which is accumulated in a memory for respective clients;
calculating information on incentive in compliance with the collecting data updated; and
providing information on an order screen by which said client orders the used office supplies, wherein said information on the order screen includes said information on the incentive.

101. A collecting method of collecting used office supplies comprising the steps of:
reading a collecting code which is sent together with the used office supplies and includes at least information on kinds of the used office supplies;
managing a collecting condition of the used office supplies in compliance with the collecting code read by the reader; and
providing information for indicating the collecting condition managed to a computer externally connected via the Internet.

102. A collecting method of collecting used office supplies comprising the steps of:
providing a computer communicably connected with information on a screen for requesting collecting of the used office supplies, at least for inputting the information which identifies the kind of said used office supplies; and
informing said computer of a collecting code including the information which is input via an indicating screen based on said information on the screen and identifies the kind of said used office supplies.

103. An information processing method of receiving a request to collect used office supplies comprising the steps of:
receiving information on a request for collecting including information on at least the kind and quantity of said used office supplies which is transmitted from the computer connected via the Internet;
generating the collecting code including information on at least the kind and quantity of said used office supplies based on the information on the request for collecting received; and
transmitting the collecting code generated by the generator to said computer.

104. A computer program product comprising a computer readable medium having a computer program code for a control method which controls a collecting apparatus for collecting used office supplies, comprising program codes for:
updating client's collecting data of the used office supplies which is accumulated in a memory for respective clients;
calculating information on incentive in compliance with the collecting data updated; and
providing information on an order screen by which said client orders the used office supplies, wherein said information on the order screen includes said information on the incentive.

105. A computer program product comprising a computer readable medium having a computer program code for a control method which controls a collecting apparatus for collecting used office supplies, comprising program codes for:
reading a collecting code which is sent together with the used office supplies and includes at least information on kinds of the used office supplies;
managing a collecting condition of the used office supplies in compliance with the collecting code read; and
providing information for indicating the collecting condition managed to a computer externally connected via the Internet.

106. A computer program product comprising a computer readable medium having a computer program code for a control method which controls a collecting apparatus for collecting used office supplies, comprising program codes for:
providing a computer communicably connected with information on a screen for requesting collecting of the used office supplies, at least for inputting the information which identifies the kind of said used office supplies; and
informing said computer of a collecting code including the information which is input via an indicating screen based on said information on the screen and identifies the kind of said used office supplies.

107. A computer program product comprising a computer readable medium having a computer program code for an information processing which receive a request to collect used office supplies, comprising program codes for:
receiving information on a request for collecting including information on at least the kind and quantity of said used office supplies which is transmitted from the computer connected via the Internet;
generating the collecting code including information on at least the kind and quantity of said used office supplies based on the information on the request for collecting received; and
transmitting the collecting code generated by the generator to said computer.
